# EUROPEAN PATENT APPLICATION

(11) **EP 1 047 269 A2**
(43) Date of publication of application: **25.10.2000**
(21) Application number: 00303297.6
(22) Date of filing: 19.04.2000
(51) Int. Cl.: H04N 7/24, H04N 5/44

(54) **Television broadcasting system with storage in consumer platforms**

(30) Priority: 19.04.1999 JP 11097599
(71) Applicant: MATSUSHITA ELECTRIC INDUSTRIAL CO., LTD., Kadoma-shi, Osaka 571-8501 (JP)
(72) Inventor: Shikatani, Yukio, Yokohama 236-0045 (JP); Shinohara, Hiroki, Yokohama 244-0801 (JP)
(74) Representative: Senior, Alan Murray

(57) **Abstract**

The present invention aims to provide a broadcasting system based on storage (204,212) in consumer platforms wherein a broadcasting station side (100) controls the playback and viewing of images and voice stored in a receiving side (200) so to make it possible to perform the broadcasting service in various forms, and the broadcast transmitting apparatus (100) of the invention multiplexes (103) AV data and provision information for designating AV data, which the information provider intends to replay and view in accordance with the display of the AV data, and transmits it. Then, a broadcast receiving apparatus (200) makes it possible to replay and view only the AV designated by provision information corresponding to the AV data presented by a presentation information selecting means when outputting the received AV data and displaying it. The information provider transmits information, which the information provider of the broadcasting station side has created intentionally, when the information provider intends, and a viewer can receive information as the information provider intends, and view a portion or the entirety of the program broadcast so far based on the information.

## Description

The present invention relates to a broadcasting system based on storage in consumer platforms, wherein a broadcasting station side transmits a program and information of the program, a receiving apparatus stores them to present them to a viewer in various kinds of service forms, and relates to the transmitting apparatus and the receiving apparatus, and particularly characterized in that the viewer can view stored images and voice associated with the scene of the program by the broadcasting station as viewing the program.

In the digital broadcasting, there has been conventionally made the study and development of the a broadcasting system based on storage in consumer platforms wherein a storage medium is placed in a receiving apparatus such as a television and the content of a program and information accompanying therewith are stored, and displayed in various kinds of service forms.

Japanese Patent Laid-Open No. 9-135391 discloses a broadcasting system wherein a transmitting side transmits section information that designates a highlight portion, the receiving apparatus stores only the portion, and the viewer of the receiving side can replay and view the stored highlight scene and view it whenever necessary.

Japanese Patent Laid-Open No. 10-304321 discloses a broadcasting system wherein the transmitting side transmits additional information of a program and the receiving side stores the additional information

However, in the conventional a broadcasting system based on storage in consumer platforms, since the selection from the stored highlight scenes and additional information depends on the viewers, it is difficult for the viewers to search for information that they wish in a case where a large amount of information is stored.

Moreover, though the highlight scene can change with a lapse of time in such a live broadcasting program, the conventional system cannot appropriately correspond to the change in the highlight scene since once the scene is designated as a highlight, the scene will be stored in the receiving apparatus.

The cause of such a problem is that the playback and viewing of the images and voice stored by the receiving side cannot be controlled by the broadcasting station side in the conventional a broadcasting system based on storage in consumer platforms.

If the playback and viewing of the images and voice stored by the receiving side can be controlled by the broadcasting station side, which will serve such a viewing form that the viewer can playback and view the image relating to the broadcasting scene, which the broadcasting station (information provider) designates from the images stored, as the viewer viewing the currently broadcasting program. For example, in the case of the broadcast of a baseball game, the information provider exercises control such that only the images of past scenes relating to a batter at bat, who is now in the batter's box, can be replayed and viewed. Then, the viewer selects the playback and viewing as viewing the live broadcast of baseball game so that conditions of the batter's at bat so far can be seen from the replayed image.

Moreover, if the viewer views the program from halfway, it is possible to replay the scenes, which designated by the broadcasting station from the images stored, and to see a rough outline of the program.

In consideration of the above-mentioned points, the present invention is one that improves the conventional system, and it is an aim of the present invention to provide a a broadcasting system based on storage in consumer platforms wherein a broadcasting side controls the playback and viewing of images and voice stored by the receiving side so as to make it possible to provide the broadcast services in various forms, and to provide a broadcast transmitting apparatus and a broadcast receiving apparatus of the system.

According to the present invention, in the a broadcasting system based on storage in consumer platforms comprising a broadcast transmitting apparatus for transmitting AV data composed of an image of a program and voice and a broadcast receiving apparatus having storing means for storing received signals, wherein the broadcast transmitting apparatus multiplexes AV data and provision information designates AV data, intending to permit an information provider to replay and view in accordance with the display of the AV data, and transmits it, and the broadcast receiving apparatus makes it possible to replay and view only the AV data designated by the provision information corresponding to the AV data when displaying the received AV data.

Whereby, information, which is created by the information provider of the broadcast transmitting apparatus side intentionally, is transmitted when the information provider intends, and the user of the broadcast receiving apparatus side can receive information as the information provider of the broadcast transmitting apparatus side intended, and can view a portion or the entirety of the program broadcast so far based on the information.

Moreover, the broadcast transmitting apparatus comprises AV material storing means for storing AV data, AV material selecting means for selecting AV data from the AV material storing means, provision information storing means for storing the provision information, provision information selecting means for selecting provision information from the provision information storing means, multiplexing means for multiplexing the AV data selected by the AV material selecting means and the provision information selected by the provision information selecting means to generate a multiplexed signal, and transmitting means for converting the multiplexed signal to a broadcast signal in accordance with a transmission rule and transmitting it.

Whereby, provision information linked to AV data, which the information provider of the broadcast transmitting apparatus has intentionally edited, can be provided as information relating to AV data, which is currently broadcasting, and the broadcast transmitting apparatus can control information to be provided according to the content of the program, which is currently broadcasting.

Moreover, the broadcast receiving apparatus comprises receiving means for receiving a broadcast signal, separating means for separating data received by the receiving means into AV data and the provision information, AV data storage processing means for performing storage processing of the separated AV data, AV data storing means for storing AV data subjected to storage processing by the AV data storage processing means, AV data selecting means for selecting necessary AV data from the AV data storing means, AV data output controlling means for determining AV data to be externally output among AV data from the separating means and AV data from the AV data selecting means, presentation information storage processing means for converting the provision information separated by the separating means to the presentation information, presentation information storing means for storing the presentation information, presentation information selecting means for selecting the presentation information stored in the presentation information storing means to provide an instruction of selecting AV data to the AV data selecting means based on the selected presentation information, and presentation information externally outputting means for externally outputting the presentation information from the presentation information selecting means.

Whereby, presentation information linked to AV data can be presented simultaneously with AV data separated at the same time, and the user arbitrarily selects the presentation elements of the presentation information, so that a portion or the entirety of stored AV data linked to the presentation element can be replayed, and the user can view stored AV data corresponding to the selected presentation element.

According to the invention described in claim 1, the present invention comprises the a broadcasting system based on storage in consumer platforms comprising a broadcast transmitting apparatus for transmitting AV data composed of an image of a program and voice and a broadcast receiving apparatus having storing means for storing received signals, wherein broadcast transmitting apparatus multiplexes AV data and provision information which designates AV data intending an information provider to replay and view in accordance with the display of the AV data, and transmits it, and the broadcast receiving apparatus makes it possible to replay and view only the AV designated by the provision information corresponding to the AV data when displaying the received AV data. Whereby, information, which the information provider of the broadcast transmitting apparatus side has intentionally created, is transmitted when the information provider intends, and the user of the broadcast transmitting apparatus side can receive information as the information provider of the broadcast transmitting apparatus side intended, and can view a portion or the entirety of the program broadcast so far based on the information.

The invention described in claim 2 is that the broadcast receiving apparatus generates and stores presentation information, which enables the uses to choose the playback and viewing of the AV data stored to correspond to the provision information. The broadcast receiving apparatus creates presentation information wherein provision information is associated with AV data multiplexed at this time, and stores it, whereby performing the program viewing as the information provider intended even if the AV data is replayed after the broadcasting.

The invention described in claim 3 comprises an AV data providing apparatus for storing all AV data transmitted from the broadcast transmitting apparatus wherein the broadcast receiving apparatus obtains the AV data from the AV data providing apparatus when there is no AV data that a user wishes to replay and view in the storing means of the broadcast receiving apparatus. Whereby, even if the broadcast receiving apparatus dose not store the entirety of the programs so far or can not store them, AV data broadcast so far can be replayed without fail when it is intended to be replayed since there is provided the AV data providing apparatus, which manages a portion or the entirety of AV data and which transmits it as required.

The invention described in claim 4 is the broadcast transmitting apparatus constituting the a broadcasting system based on storage in consumer platforms according to claim 1, 2, or 3, wherein the broadcast transmitting apparatus comprises AV material storing means for storing AV data, AV material selecting means for selecting AV data from the AV material storing means, provision information storing means for storing the provision information, provision information selecting means for selecting provision information from the provision information storing means, multiplexing means for multiplexing the AV data selected by the AV material selecting means and the provision information selected by the provision information selecting means to generate a multiplexed signal, and transmitting means for converting the multiplexed signal to a broadcast signal in accordance with a transmission rule so as to transmit it. Whereby, it is possible to provide provision information as information relating to AV data currently broadcasting, which changes with providing time and is linked to AV data, the AV data being edited by the information provider of the broadcast transmitting apparatus side intentionally, and information to be provided can be controlled according to the content of the program, which is currently broadcasting, by the broadcast transmitting apparatus.

According to the invention described in claim 5, the provision information is composed of provision elements systemized in the form of a hierarchical structure, and the provision information selecting means selects a portion or the entirety of the provision elements, so that the selection of presentation information can be efficiently performed.

According to the invention described in claim 6, the provision information is linked to the AV data designated by the provision information, and the information provider of the broadcast transmitting apparatus side provides provision information linked to AV data as information to be provided simultaneously with AV data, which is currently broadcasting.

According to the invention described in claim 7, information of the linked AV data is described in the provision element, and that each provision element can be linked to AV data.

According to the invention described in claim 8, the linked AV data is updated with a lapse of time, and that the information provider can change AV data, which has been intentionally edited, by providing time.

According to the invention described in claim 9, the provision information includes enabling information for making a portion or the entirety of presentation information available, which has been stored in the broadcast receiving apparatus and which has been linked to AV data. Whereby, a portion or the entirety of the provision information is transmitted from the broadcast transmitting apparatus in advance. Then, at the time of providing information relating to the content of the program, which is currently broadcasting, only the enabling information for searching and extracting the elements of the provision information that is made effective from the provision information linked to AV data broadcast so far may be transmitted. This reduces the number of operator's operations for providing information.

According to the invention described in claim 10, a playback and viewing range of the AV data, which the information provider intends, is specified by cutting information, and the provision information is linked to the cuffing information. Whereby, the broadcast transmitting apparatus can carry out work for culling AV data and work for selecting provision information separately, so that the work of information provider can be shared and information can be provided efficiently.

According to the invention described in claim 11, a presenting method of the stored presentation information in the broadcast receiving apparatus is designated in the provision information. Whereby, AV data and presentation information once stored can be provided at timing other than provide timing when the information provider has transmitted them in real time. Moreover, since the program is stored, the user can freely view previous information of the program by the stored presentation information.

The invention described in claim 12 is the broadcast receiving apparatus constituting the a broadcasting system based on storage in consumer platforms according to claim 1, 2, or 3, the broadcast receiving apparatus comprises receiving means for receiving a broadcast signal, separating means for separating data received by the receiving means into AV data and the provision information, AV data storage processing means for performing storage processing of the AV data, AV data storing means for storing AV data subjected to storage processing by the AV data storage processing means, AV data selecting means for selecting necessary AV data from the AV data storing means, AV data output controlling means for determining AV data to be externally output by AV data from the separating means and AV data from the AV data selecting means, presentation information storage processing means for converting the provision information separated by the separating means to the presentation information, presentation information storing means for storing the presentation information, presentation information selecting means for selecting the presentation information stored in the presentation information storing means to provide an instruction of selecting AV data to the AV data selecting means based on the selected presentation information, and presentation information externally outputting means for externally outputting the presentation information from the presentation information selecting means. Whereby, it is possible to present the presentation information linked to AV data simultaneously with AV data separated at the same time, and the user arbitrarily selects the element of the presentation information. Since this allows the user to view a portion or the entirety of stored AV data linked to the element, the user can view the stored AV data corresponding to the selected presentation element.

According to the invention described in claim 13, AV data received in real time is separated by the separating means to be output to an external device, and the AV data is stored in the AV data storing means, and the presentation information to be externally output is generated based on the provision information received in real time, and when anyl presentation information is selected therefrom, the corresponding data of the stored AV data is replayed. Since the program can be stored whenever necessary as outputting the program, which is on the air, it is possible to catch up with the program, which is on the air, by performing playback in fast forward even while AV data broadcast so far in the program, which is on the air, is reproducing, and it is possible to view the program even after the broadcast is ended.

According to the invention described in claim 14, when the presentation information storing means stores the presentation information in advance and enabling information is transmitted from the broadcast transmitting apparatus, the presentation information selecting means selects presentation information, which has been made available by the enabling information, from the presentation information stored in the presentation information storing means. The user can obtain only the provision information, which is made effective by the information provider at this time, from a large amount of presentation information stored, and it is possible to view a portion or the entirety of AV data stored so far based on the information.

According to the invention described in claim 14, the presentation information storing means stores cuffing information that specifies a playback and viewing range of AV data transmitted from the broadcast transmitting apparatus, and the presentation information selecting means provides the instruction of selecting AV data to the AV data selecting means by use of the presentation information and the cuffing information. Because clarify the relationship between the presentation information and the cutting information is clarified, the user can easily carry out edition agreeable to the user's taste. Moreover, the user can obtain intended information when the information provider intends.

According to the invention described in claim 16, the way of selection of presentation information by the presentation information selecting means is limited based on a rule set by a user or an output history of AV data output from the AV data output controlling means. Whereby, provision information sent from the broadcast transmitting apparatus is converted to presentation information in the broadcast receiving apparatus, and the broadcast receiving apparatus can designate enabling information that makes only the limited presentation information effective. This makes it possible to reflect the information provider's intention in the information and to present enabling information for the user. Moreover, even if presentation information is stored in the broadcast receiving apparatus, the information provider of the broadcast transmitting apparatus transmits enabling information for extracting information to be currently provided, whereby narrowing the present range of presentation information. Furthermore, the user of the broadcast receiving apparatus can fix enabling information that makes only the limited presentation information effective. This makes it possible to reflect the information provider's intention in the information and also to present enabling information for the user.

The above structure and features of the present invention will be apparent from the following detailed description taken in conjunction with the accompanying drawings in which :
Fig. 1 is a schematic block diagram of a broadcast system (broadcast transmitting apparatus and broadcast receiving apparatus) according to a first embodiment of the present invention;
Fig. 2 is a view explaining provision information and AV data according to the broadcast transmitting apparatus of the first embodiment;
Fig. 3 is a view explaining the description of providing timing of provision information according to the broadcast transmitting apparatus of the first embodiment,
Fig. 4 is a view explaining transmission timing of provision information with ON/OFF according to the broadcast transmitting apparatus of the first embodiment,
Fig. 5 is a view explaining transmission timing of provision information with effective time according to the broadcast transmitting apparatus of the first embodiment,
Fig. 6 is a view explaining presentation information and AV data according to the broadcast transmitting apparatus of the first embodiment,
Fig. 7 is an example of presentation information according to the broadcast transmitting apparatus of the first embodiment,
Fig. 8 is a flowchart of transmission according to the broadcast transmitting apparatus of the first embodiment,
Fig. 9 is a flowchart of provision information selection processing according to the broadcast transmitting apparatus of the first embodiment,
Fig. 10 is a flowchart of presentation according to the broadcast transmitting apparatus of the first embodiment,
Fig. 11 is a view explaining a provision information transmission unit according to the broadcast transmitting apparatus of the first embodiment,
Fig. 12 is a flowchart of provision information selection processing according to the broadcast transmitting apparatus of a second embodiment,
Fig. 13 is an example of provision information when there is enabling information according to the broadcast transmitting apparatus of the second embodiment,
Fig. 14 is an example of enabling information according to the broadcast transmitting apparatus of the second embodiment,
Fig. 15 is an example of enabling information according to the broadcast receiving apparatus of the second embodiment,
Fig. 16 is an example of cuffing information according to the broadcast transmitting apparatus of a third embodiment,
Fig. 17 is an example of cutting information according to the broadcast transmitting apparatus of the third embodiment,
Fig. 18 is an example of provision information (playback control after storage) according to the broadcast transmitting apparatus of a fourth embodiment,
Fig. 19 is a configuration of the broadcasting system having an AV data providing apparatus according to a sixth embodiment,
Fig. 20 is a flowchart of AV data playback by the broadcast receiving apparatus having the AV data providing apparatus according to the sixth embodiment, and
Fig. 21 is a flowchart of AV data transmission of the AV data providing apparatus according to the sixth embodiment.

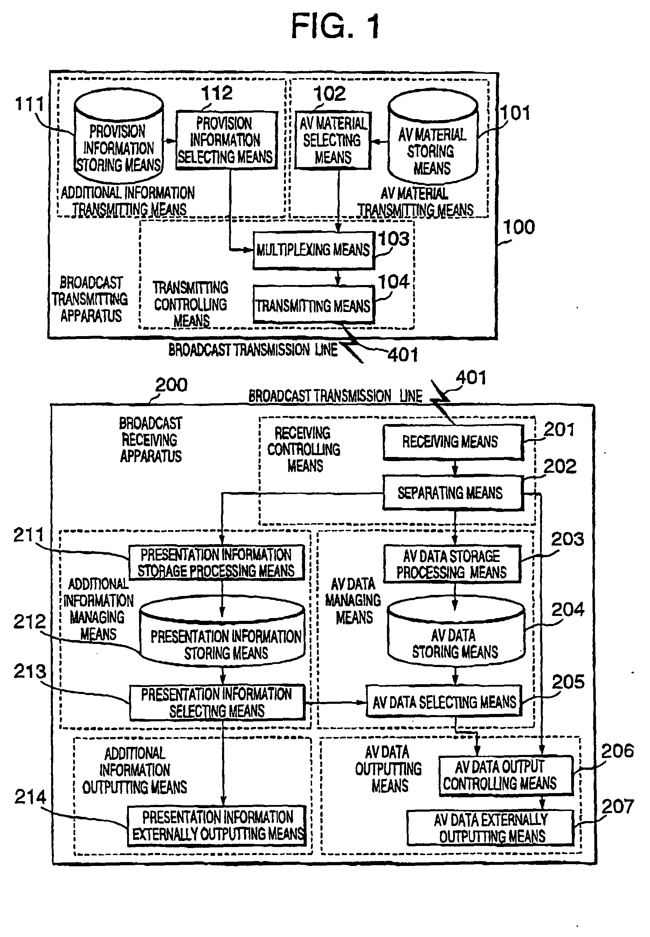

The following will explain embodiments of the present invention with reference to Figs. 1 to 21.

### (First embodiment)

A broadcasting system according to the first embodiment, as shown in Fig.1, comprises a broadcast transmitting apparatus 100 and a broadcast receiving apparatus 200, and the broadcast transmitting apparatus 100 includes an AV material storing means 101 that stores data such as an image, a voice and the like (hereinafter referred to as AV data), an AV material selecting means 102 for selecting necessary AV materials from the AV material storing means 101, a provision information storing means 111 that stores information linked to the AV materials (hereinafter referred to as provision information), an provision information selecting means 112 for selecting necessary provision information from the provision information storing means 111, a multiplexing means 103 for multiplexing AV data selected by the AV material selecting means 102 and provision information selected by the provision information selecting means 112, and a transmitting means 104 for converting a multiplexed signal obtained by the multiplexing means 103 to a transmission format to be transmitted.

Also, the broadcast receiving apparatus includes a receiving means 201 for receiving broadcasting data in which AV data and provide data are multiplexed, a separating means 202 for separating broadcasting data received by the receiving means 201 into AV data and provision information linked to AV data, an AV data storage processing means 203 that performs storage processing of the separated AV data, an AV data storing means 204 for storing AV data subjected to storage processing by the AV data storage processing means 203, an AV data selecting means 205 for selecting necessary AV data from the AV data storing means 204, an AV data output controlling means 206 for controlling AV data to be externally output by use of the AV data separated by the separating means 202 and of the AV data selected by the AV data selecting means 205, a presentation information storage processing means 211 for converting provision information to presentation information in such a form that keeps conjunction with multiplexed AV data so as to be stored, a presentation information storing means 212 for storing presentation information subjected to storage processing by the presentation information storage processing means 211, a presentation information selecting means 213 for selecting necessary presentation information from the presentation information storing means 212 so as to instruct the AV data selecting means 205 to select AV data, and a presentation information externally outputting means 214 for externally outputting presentation information selected by the presentation information selecting means 213.

The broadcast transmitting apparatus 100 in this system multiplexes data of an image and data of voice for a program, and information (provision information), which indicates a playback image t o be shown with this image, and sends them.

On the other hand, the broadcast receiving apparatus 200 separates the multiplexed signal transmitted, stores image and voice data, and links provision information to multiplexed data of image and data of voice (i.e., converts it to presentation information), and stores it.

When a user views the image and voice of a program by use of the broadcast receiving apparatus 200, presentation information linked to the viewed image and voice is presented, and if the user selects any presentation information, a playback image specified by the selected presentation information.

The configuration of this system and the operation thereof will be more specifically explained.

First, the configuration of the broadcast transmitting apparatus 100 in Fig. 1 will be specifically explained.

### 〈AV material storing means 101〉

The AV material storing means 101 is a storage medium that stores AV data as material. AV data stored is data of image and data of voice that makes up a program to be broadcast on TV in ordinary households, and that is presented in the forms of stream, or encoded form such as MPEG1, MPEG2, and the like.

As storage media, there are tape media in a cut machine for the image, which has been used conventionally in the broadcasting stations. In addition, there are, for example, a memory, HDD, PD, MD, MO, DVD-ROM, DVD-RAM, DAT, D-VHS, and the like.

For reference sake, AV data can externally be added to the AV material storing means 101.

### 〈AV material selecting means 102〉

The AV material selecting means 102 selects necessary AV data from the AV material storing means 101, and sends the selected AV data to the multiplexing means 103 as a broadcast signal. To select AV data from the AV material storing means 101, the means for externally selecting AV data is set up in the AV material selecting means 102 so that an information provider can select AV data manually. At this time, GUI can be designed to facilitate the selection from the AV material storing means 101.

In addition, the AV material selecting means 102 also may be configured so as to include a broadcast schedule therein, and to automatically select AV data, which matches the schedule from the AV material storing means 101.

Or, there may exist other means for creating a broadcast schedule and managing it, and on the basis of the broadcast obtained therefrom, AV data may be automatically selected from the AV material storing means 101.

### 〈Provision information storing means 111〉

The provision information storing means 111 is a storage medium that stores provision information to deal with AV data efficiently and effectively. As the storage medium, there are HDD, PD, MD, MO, DVD-ROM, DVD-RAM, and the like. In addition, DAT, D-VHS, etc., can be considered as tape media.

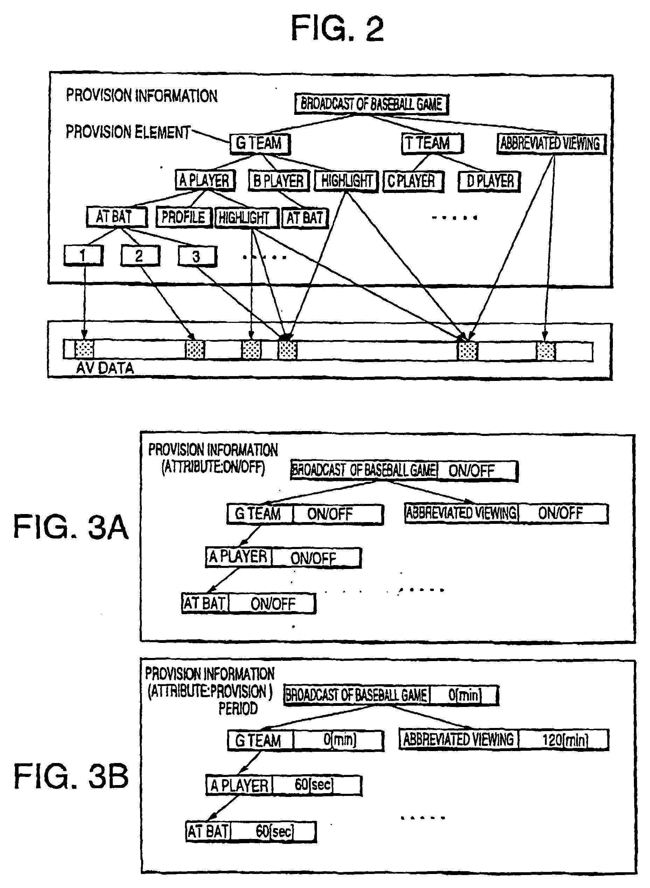

As shown in Fig. 2, provision information is composed of one or more elements (hereinafter referred to as provision element), each of the elements having a unit expressed by a character string or a symbol string or a combination thereof, and being added thereto linking information to AV data as its attribute, and this provision element is systematized in the form of a single hierarchy or a multilevel hierarchy. In a case where the respective provision elements of provision information are systematized in the form of a multilevel hierarchy, each provision element contains information of an attribute that shows which provision element each provision element has relationship with and what relationship each provision element has with such a provision element.

Thus, each provision element of provision information includes linking information, which shows the entirety of the program broadcast so far or a portion or the entirety of the program to be broadcast or being on the air, as required. Then, this linking information can be changed with time regardless of whether or not the program to be linked is on the air.

Also, as shown in Fig. 3(a), an attribute of ON or OFF is added to each provision element of provision information as information for specifying the provision period. A provision element, which has been transmitted after adding OFF thereto, is displayed by a receiving side, and a provision element, which has been transmitted after adding ON thereto, is non-displayed by the receiving side. Namely, the provision element transmitted with provision information in an ON state is continued to be effective as long as provision information in an OFF state is not transmitted. There can be considered a form in which each provision elements of provision information is pre-transmitted in an OFF state and stored in the receiving side, and only information, which is changed to be in an ON state later, is transmitted.

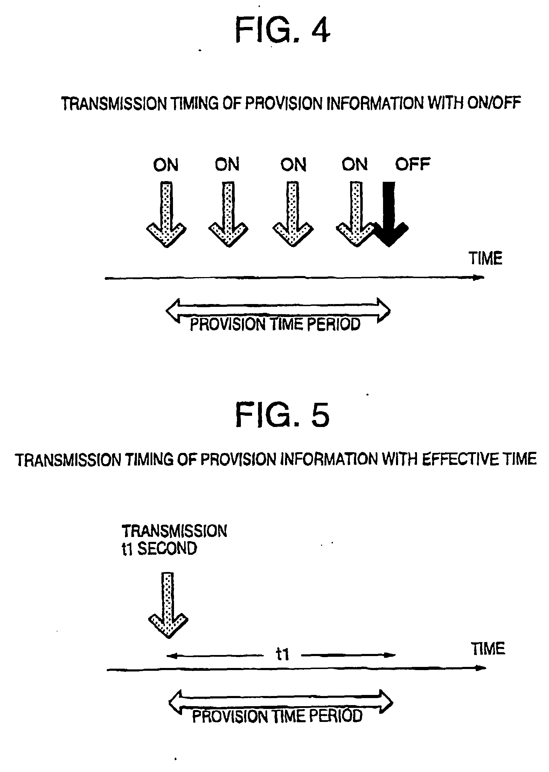

Further, even if the reception is started at any time in a period for providing information, a signal of provision information in an ON state may be continued to be transmitted for a certain period of time as shown in Fig. 4 such that provision information of the time can be received. Also, there can be considered a transmission form wherein if a version is formed at provision information and the version is updated, a portion or the entirety of provision information concerned is newly recreated and transmitted even if the same provision information is continued to be ON.

Also, as shown in Fig. 3(b), it is possible to use a form wherein period information to be provided is added to each provision element of provision information as an attribute and the display of only the period at the receiving side is made effective and periods other than the period are set to non-display. In this case, as shown in Fig. 5, only the time, which is expressed by the attribute, serves as a provision time period after provision information is transmitted.

Moreover, there can be consider a form in which information having an ON/OFF signal and an effective period signal combined is added to each provision element as an attribute. In addition, it is possible to describe time information, which denotes how long this information has been transmitted, in provision information or provision elements. Since this time information is a correct present start time of provision information, effectiveness of stored presentation information or presentation elements may be determined on the basis of this present start time when a recording and playback are carried out by the broadcast receiving apparatus.

Identification information for specifying the provision element such as a numeric string, a symbol string, a character string may be added to the respective provision elements constituting provision information. In addition, identification information may be added to the provision information as such in order to specify the entirety of provision information.

Furthermore, an identifier of AV data stored and time information of AV data (a starting time, an offset time or a duration time from the starting time, a certain time period, etc.) may be added to linking information to AV data to be added to the respective provision elements of provision information. Moreover, linking to character data and the like other than AV data is possible. It is to be noted that linking information to AV data is not essential to the attributes of the respective provision information. Moreover, a total amount of time required when all of the AV data have been replayed may be described as an attribute of each provision element.

For reference sake, provision information may be added externally to the provision information storing means 111, or a provision information adding function that performs edition may be provided.

### 〈Provision information selecting means 112〉

The provision information selecting means 112 selects a portion or the entirety of the necessary provision information from the provision information storing means 111, sends the selected provision information to the multiplexing means 103, and instructs the multiplexing means 103 to multiplex the provision information.

In order to select provision information, means for selecting provision information externally is provided, and this allows an information provider to select provision information (a portion or the entirety of provision information of Fig. 2) manually as viewing AV data before broadcasting, on the air, or after broadcasting.

At this time, if the information provider views a certain AV data and selects provision information by the provision information selecting means 112, the AV data and provision information selected simultaneously with the AV data is sent to the multiplexing means 103. This is the same as the case in which telop is put on a screen depending on the situation in the conventional broadcasting, and this method makes it possible to transmit ON and OFF of provision information manually.

Further, as mentioned above, since provision information may be updated with a lapse of time, there can be used a configuration in which the latest information is automatically sent to the multiplexing means 103 when provision information is once selected and information of link of the provision information to AV data is updated.

Moreover, provision information may be automatically selected in accordance with a predetermined schedule.

In addition, there can be considered a method wherein a key word is extracted from the constituent elements such as an image, a voice, etc., of the AV data on the air and provision information is selected based on information associated with the key word.

Further, the selected provision information is repeatedly sent to the multiplexing means 103 periodically, and if the provision of provision information becomes unnecessary, the provision information selecting means 112 instructs the multiplexing means 103 to stop multiplexing provision information. Namely, provision information that is ON is continuously transmitted at regular intervals, and if the provision of provision information becomes unnecessary, provision information that is OFF is transmitted.

Furthermore, there can be used a form in which an attribute for specifying an effective period is added to provision information and the resultant is sent to the multiplexing means 103, and the multiplexing means 103 performs multiplexing only for the period.

If there is no provision information to be selected in the provision information storing means 111, new provision information can be added to the provision information storing means 111 by use of the provision information adding function in the provision information storing means 111, while the selection and transmission thereof can be carried out simultaneously.

For reference sake, the provision information selecting means 112 does not necessarily select provision information.

### 〈Multiplexing means 103〉

The multiplexing means 103 multiplexes AV data output from the AV data selecting means 102 and provision information output from the provision information selecting means 112, and sends the multiplexed signal to the transmitting means 104.

The multiplexing is performed in accordance with MPEG2 transport stream. In addition, there is a case in which only one of AV data and provision information is sent to the transmitting means 104.

### 〈Transmitting means 104〉

The transmitting means 104 converts the multiplexed signal received to a transmission format of a broadcast transmission line 401, and performs transmission.

Next, the configuration of the broadcast receiving apparatus 200 of Fig. 1 will be specifically explained.

### 〈Receiving means 201〉

The receiving means 201 receives a broadcast signal transmitted from the broadcast transmission line 401, and sends the received broadcast signal to the separating means 202.

### 〈Separating means 202〉

The separating means 202 provides a format conversion of the broadcast signal output from the receiving means 201, which is opposite to the transmitting means 104 of the broadcast transmitting apparatus 100, and performs processing thereof, which is opposite to the multiplexing means 103, to separate the signal into AV data and provision information. The separated AV data is sent to the AV data storage processing section 203 and AV data output controlling means 205. In addition, the separated provision information is sent to the presentation information storage processing means 211.

For reference sake, a broadcast signal is not always composed of AV data and provision information multiplexed, and some broadcast signals are composed of only AV data. In this case, processing for only AV data is performed.

### 〈AV data storage processing means 203〉

The AV data storage processing means 203 obtains AV data from the separating means 202, and stores it in the AV data storing means 204. At this time, they are managed in the form such that a portion or the entirety of AV data to be stored can be identified. For example, AV data in unit of program is managed by use of SI information and EPG information, information of the program (broadcasting station identification, program identification, and the like) and offset time from the program start time, and the duration time, and the like are obtained from presentation information to be explained later, and a specific range of AV data is managed. Moreover, this management may be performed by use of time at which the broadcast signal has been received or identifiers (character string, symbol string, numeric string) divided by the broadcast receiving apparatus by itself.

For reference sake, either of AV data in a stream format and AV data in a file format may be stored in the AV data storing means 204.

In addition, all AV data received may be stored, the storage may be started by programming, or all that the user has reviewed may be stored.

### 〈AV data storing means 204〉

The AV data storing means 204 is a storage medium that stores AV data output from the AV data storage processing means 203. As the storage medium, there are a memory, HDD, PD, MD, MO, DVD-ROM, DVD-RAM, and the like. In addition, DAT, D-VHS, etc., can be used as tape media.

### 〈AV data selecting means 205〉

The AV data selecting means 205 selects a portion or the entirety of the necessary AV data and sends the selected AV data to the AV data output controlling means 206. At this time, the AV data selecting means 205 performs the selection of AV data on the basis of information for selecting AV data from the presentation information selecting means 213, or performs the selection on the basis of information such as identifiers of AV data stored in the AV data storing means 204 or time information of AV data (a starting time, an offset time or a duration time from the starting time, a certain time period, etc.).

Moreover, it is possible to provide inputting means that can select AV data externally in the AV data selecting means 205 such that the user can directly select AV data from the AV data storing means 204. This is the same as the general video operation.

### 〈AV data output controlling means 206〉

The AV data output controlling means 206 controls AV data to be externally output, that is, AV data to be currently broadcast by use of AV data separated from the separating means 202 and AV data output from AV data selecting means 205, to send the controlled AV data to the AV data externally outputting means 207.

Here, to control AV data to be sent to the AV data externally outputting means 207, for example, AV data switching is performed. Namely, AV data, which has been just received, and AV data stored are switched and output.

For example, when AV data broadcast so far is received from the AV data selecting means 205, these AV data is output without fail. Or, when AV data that is input from the AV data selecting means 205 is output to the AV data externally outputting means 207, and AV data input from the AV data selecting means 205, that has been broadcast so far, has caught up with AV data, which is input from the separating means 202 and currently, on the air or AV data corresponding thereto, at the same time. At this time, the external output is switched to AV data that is input from the separating means 202.

For reference sake, as a method for controlling AV data to be sent to the AV data externally outputting means 207, it is possible to combine two AV data and output it. For example, AV data can be output in such a form that a screen on which AV data from the separating means 202 and AV data from the AV data selecting means 205 are displayed is divided into two, or one of two AV data is superimposed on the other and displayed.

### 〈AV data externally outputting means 207〉

The AV data externally outputting means 207 externally outputs AV data output from the AV data output controlling means 206. As an externally outputting method, for example, outputting is carried out by a display device for outputting an image such as TV, CRT, a liquid crystal display, a projector, a plasma display, and the like and a speaker such as a speaker.

### 〈Presentation information storing means 212〉

The presentation information storing means 212 is a storage medium that stores presentation information output from the presentation information storage processing means 211. As the storage Medium, there are a memory, HDD, PD, MD, MO, DVD-ROM, DVD-RAM, and the like. In addition, DAT, D-VHS, etc., may be used as tape media.

For reference sake, the presentation information storing means 212 may be the same media as that of the AV data storing means 204.

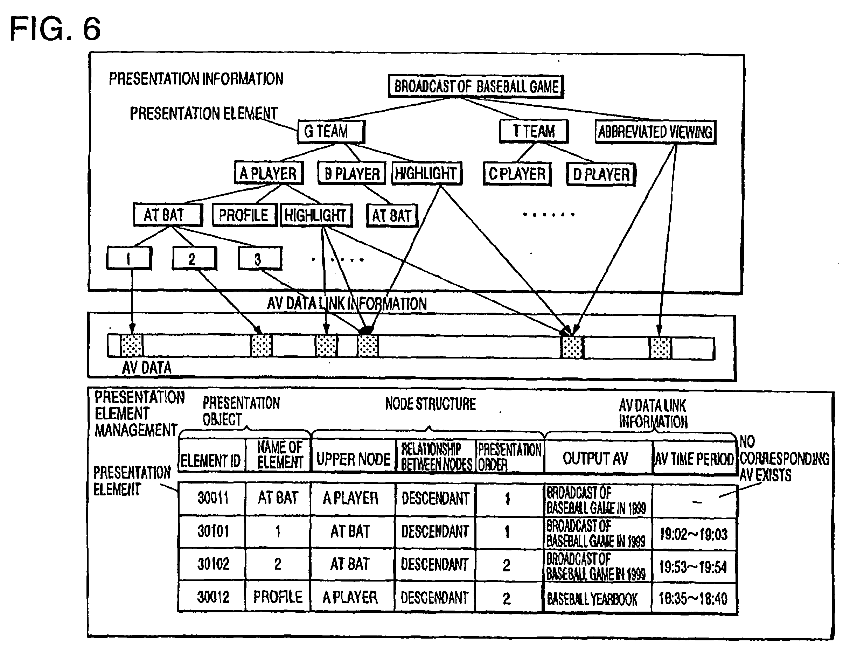

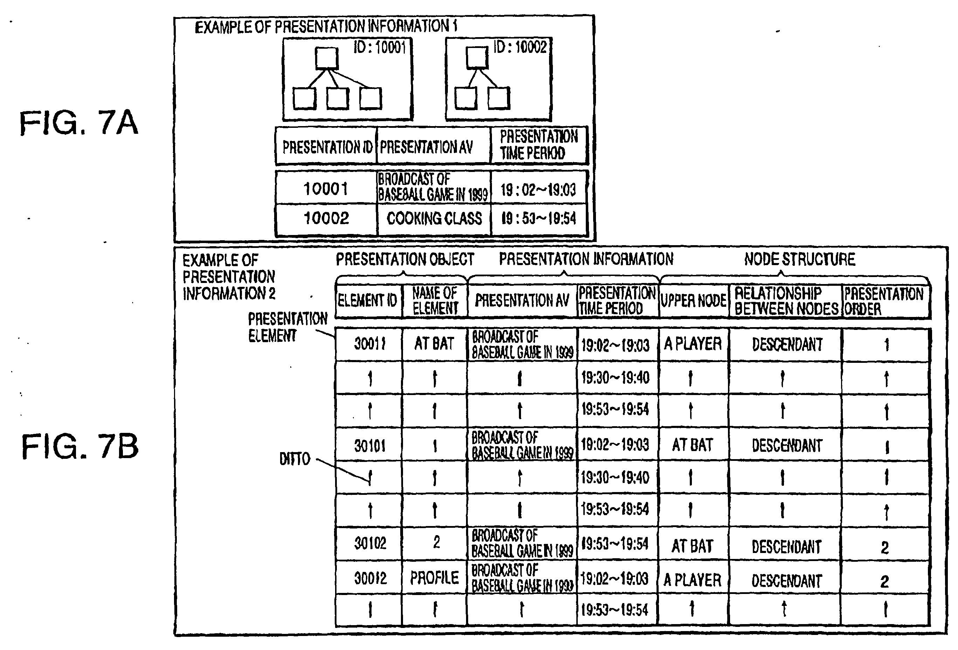

Here, presentation information is information that converts the provision information to keep the relationship with AV data multiplexed simultaneously with the received provision information and that is managed. Examples of the presentation information are shown in Figs. 6 and 7.

As shown in Fig. 6, in the presentation information, the configuration in which the respective provision elements transmitted by provision information are systematized is grasped as a configuration of the presentation elements corresponding to the provision elements (Fig. 6 (a)), and the presentation elements are managed as in a presentation element management of Fig. 6 (b). In this presentation element management, the presentation elements are described by an element ID and an element name, and the node structure of the presentation elements are described by an upper node, a node relationship, and a present order at the upper node. Further, AV data of the target link of the presentation elements are described as AV data linking information for specifying an output AV and its time period.

In addition, the relationship between presentation information and AV data that is multiplexed into the presentation information is managed by describing a presentation ID of presentation information, identification information (AV to be presented) of multiplexed AV data and the time information (present time period) to be associated with each other.

Moreover, as shown in Fig. 7 (b), it is possible to add the presentation AV and the present time period to the presentation element as its attribute so as to maintain the relationship with AV data every presentation element and to manage the relationship.

Such a management is performed to output multiplexed provision information together with the AV data simultaneously when AV data is output. Accordingly, a portion or the entirety of Fig. 6 (a) (part of provision information of Fig. 2) of the corresponding presentation information is simultaneously output in accordance with the output of AV data.

### 〈Presentation information storage processing means 211〉

The presentation information storage processing 211 obtains provision information from the separating means 202, and converts provision information to a form that maintains the relationship with the simultaneously multiplexed AV data obtained by the AV data storage processing means 203, and stores it in the presentation information storing means 212 as presentation information. The conversion to the form that maintains the relationship with AV data means to perform conversion so as to output the provision information multiplexed simultaneously with the AV data at the same time.

Here, in order to convert provision information to the form that maintains the relationship with AV data, presentation information is managed at a broadcast time period when AV data is managed at broadcast time (Fig. 7 (a)). Namely, since provision information itself transmits only information, which is effective at the instance when it is transmitted, management is performed such that a time period in which the presentation information is effective is recognizable.

For example, when a signal is received, which says that provision information is ON at 19:00, it is assumed that the effective period of this provision information is 19:00 to 19:10 at the time of 19:10 and is 19:00 to 19:20 at the time of 19: 20, until the same provision information receives a signal OFF at 20:00. Thus, provision information can be converted in the form that maintains the relationship with AV data by continuing to update the effective period of the presentation information.

Moreover, even in the case of management every presentation element as shown in Fig. 7(b), the updating of the effective period of the presentation element may be continued as the same whenever necessary.

In a case where the received provision information is always presented, provision information from the separating means 202 is not necessarily stored in the presentation information storing means 212 as presentation information converted to the form that maintains the relationship with AV data simultaneously multiplexed.

### 〈Presentation information selecting means 213〉

The presentation information selecting means 213 selects a portion or the entirety of necessary presentation information from the presentation information storing means 212, and sends it to the presentation information externally outputting means 214. Moreover, the presentation information selecting means 213 comprises externally inputting means that can select an arbitrary presentation element from presentation information currently selected. The user can select an arbitrary element from this externally inputting means.

Furthermore, in a case where presentation information is selected from the presentation information storing means 212, the presentation information and AV data are externally output in the form that maintains the relationship in the time when they are multiplexed as a multiplexed signal. For example, in a case where a reference time is provided and the presentation information selecting means 213 selects presentation information corresponding to a certain reference time, the AV data output controlling means 206 also selects AV data corresponding to the time, whereby implementing the above.

Moreover, the presentation information selecting means 213 may always select the latest presentation information automatically. Alternatively, the presentation information selecting means 213 may directly receive notification of updating of presentation information and select presentation information based on this notification.

Further, there is a case in which the presentation element is selected by the aforementioned external means or the element of presentation information is automatically selected. If information (AV data linking information) for reproducing stored AV data is described in the element of the selected presentation information, in the above case the presentation information selecting means 213 instructs the AV data selecting means 205 to select the corresponding AV data.

Moreover, if the presentation information is hierarchically structured, the instruction for selecting AV data is provided to the AV data selecting means 205 only after an instruction element for reproducing AV data has been selected.

Furthermore, the presentation information selecting means 213 may be provided with means for selecting the element automatically based on presentation information. This makes it possible to replay AV data in order based on linking information to AV data, by adding an attribute that is an automatic playback to each presentation element of presentation information.

### 〈Presentation information externally outputting means 214〉

The presentation information externally outputting means 214 is means for externally outputting presentation information output from the presentation information selecting means 213. As an externally outputting method, for example, outputting is carried out by a display device for outputting an image such as TV, CRT, a liquid crystal display, a projector, a plasma display, and the like and a speaker such as a speaker, etc.

In addition, since means for outputting AV data and means for outputting presentation information are separately provided, it is possible to take a form that AV data is output by TV and presentation information is output by a remote control unit, whereby acquiring presentation information without obstructing AV data.

For reference sake, AV data and presentation information may be presented on the same screen. In the case of TV, for example, AV data is output onto the screen and presentation information may be presented thereon. In addition, an area where AV data is output may be reduced to present the presentation information on a residual part.

For reference sake, such a function may be mounted on the aforementioned AV data externally outputting means 207.

### 〈Specific example〉

Next, an actual operation of the broadcast system in which the broadcast transmitting apparatus 100 and broadcast receiving apparatus 200 are combined and the examples of services will be explained.

Suppose a model wherein the broadcast transmitting apparatus 100 transmits provision information as selecting it based on AV data of the program, which is on the air and the broadcast receiving apparatus 200 directly outputs presentation information to be associated with AV data.

### 〈Example of provision information〉

First, an example is given of dealing with provision information in the broadcast transmitting apparatus 100. Fig. 2 shows an example of provision information stored in the provision information storing means 111. This is an example of provision information in the broadcast of a baseball game, and the provision elements indicate a portion or the entirety of AV data, which has been broadcast so far or which is on the air. AV data indicated by the provision elements of this provision information changes with the passage of time and the progress of the broadcast of the program.

For example, there is a case wherein a baseball game between a G team and a T team is broadcast live. Suppose that the G team was in the lead at the time of 20:00, and AV data of the G team at this time was used as a highlight. However, if the T team won the game at the time of 21:00, there is possibility that the previous AV data of G team used as a highlight will becomes unnecessary because of the victory of the T team.

Next, as a selective range of provision information, "broadcast of baseball game" and all afterward can be selected as provision information by the provision information selecting means 112, or "A player" and all afterward can be partially selected as provision information, or only "A player" and "B player" of "G team" can be selected as provision information.

Moreover, in order to designate the provide period of provision information, ON/OFF is provided to each element of provision information, provision information to be desirably displayed is transmitted with an attribute of ON, and provision information to be desirably non-displayed is transmitted with an attribute of OFF. Fig. 3(a) shows that provision elements of "at bat" of "A player" and "abbreviated viewing" are currently displayed and the other elements are non-displayed.

In the above example, the respective provision elements of provision information indicated a portion or the entirety of AV data, which has been broadcast so far or which is on the air. However, the provision elements of provision information may indicate a portion or the entirety of AV data of programs that will be broadcast hereafter or that are broadcast in other broadcasting stations.

### 〈Example of presentation information〉

Next, examples are given of dealing with presentation information in the broadcast receiving apparatus 200. Figs. 6 and 7 show examples of presentation information stored in the presentation information storing means 212. This is an example of provision information in the broadcast of a baseball game. In Fig. 6, the provision elements indicate a portion or the entirety of AV data, which has been broadcast so far or which is now on the air. The presentation element management shown in Fig. 6 (b) is composed of a presentation object, which shows a presentation element ID and an element name, node constituent information for showing the relationship between nodes such as an name of upper node, the relationship with the element and a presenting order in the same hierarchy, and AV data linking information, which shows a link between information for identifying AV data and the corresponding AV data such as a time period.

Since this is based on the assumption that provision information of Fig. 2 will be received, the management depends on the provision information. For reference sake, any combination of these items (presentation element ID, name of element, upper node, and the like) in the presentation element management may be formed.

Further, in Fig. 7(a), identification information (AV to be presented) of time information (presenting time period), which have been simultaneously multiplexed, are added to the provision information, and the management is performed to maintain the relationship between provision information and AV data, separately for each transmitted provision information. Presentation information of presentation ID = 10001 shows that AV data is effective at 19:02 to 19:03 among AV data of "broadcast of baseball game in 1999", and present data of presentation ID = 10002 shows that AV data is effective at 19:53 to 19:54 among AV data of "cooking class".

Furthermore, in Fig. 7(b), identification information (AV to be presented) of time information (presenting time period), which have been simultaneously multiplexed, are added as attributes of presentation information, and the management is performed to maintain the relationship between presentation information and AV data, separately for each presentation information. The presentation element of "at bat" shows that AV data is effective at 19:02 to 19:03, 19:20 to 19:40, and 19:53 to 19:54 among AV data of "broadcast of baseball game in 1999". The relationship of nodes shows that the presentation element of "A player" is its parent and is to be presented at the first in the same hierarchy. In addition, the presentation element of "profile" shows that AV data is effective at 19:02 to 19:03, 19:53 to 19:54 among AV data of "broadcast of baseball game in 1999". The relationship of node shows that the presentation element of "A player" is its parent and is to be presented at the second in the same hierarchy. Moreover, AV data of "baseball yearbook" is linked at 18:35 to 18:40.

### 〈Operation flow〉

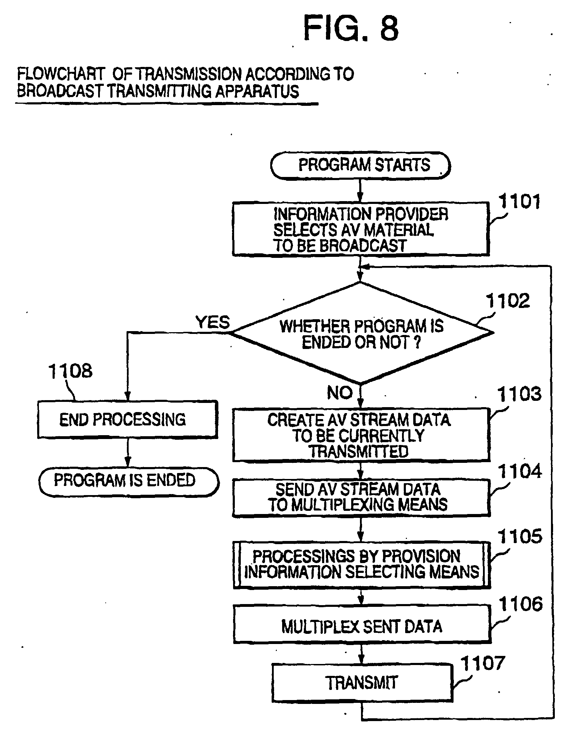

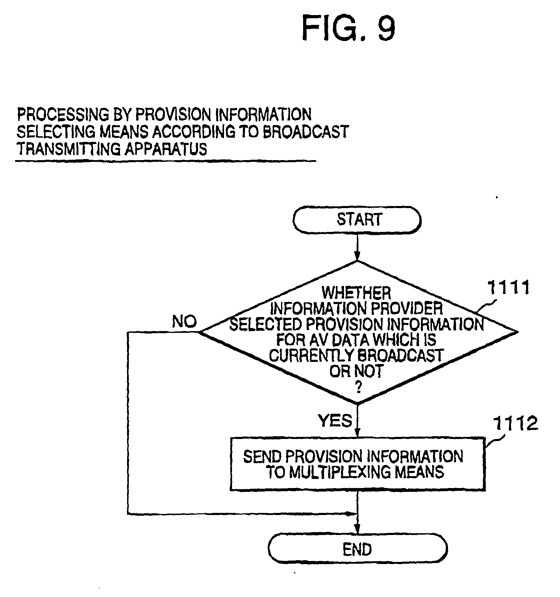

Next, the following will explain an example of a flow up to transmission of AV data and provision information in the broadcast transmitting apparatus 100 with reference to Figs. 8 and 9.

Here, step 1105 of Fig. 8 is shown in Fig. 9. An information provider selects an AV material from the AV material storing means 101 by use of the AV material selecting means 102 at a program starting time or immediately before the start (step 1101). Then, if the program is not ended (step 1102), processing for transmitting the selected AV material as stream data is performed, so that AV stream data to be currently transmitted is created (step 1103), and the created data is sent to the multiplexing means 103 (step 1104). If the program is ended in step 1102, end processing (step 1108) is carried out, and the operation is ended.

Next, in a provision information select processing step 1105, the information provider views the content of AV data, which is currently on the air, and selects provision information relative to the content from the provision information storing means 111 by use of the provision information selecting means 112 (step 1111), and sends the selected provision information to the multiplexing means 103 (step 1112). Then, broadcasting AV data and selected provision information are multiplexed (step 1106), and transmitted (step 1107). In addition, if the information provider does not select provision information in step 1111, only stream data of AV material is transmitted (steps 1106, 1107).

This makes it possible to transmit relevant provision information to AV data, which is currently on the air.

The information provider performs the selection from the stored provision information in step 1111. However, it is possible to use a manner, in which provision information newly created when necessary is selected and transmitted. In addition, it is possible to use a manner in which AV data and provide data are linked in advance, and provision information is transmitted simultaneously with AV data.

The element of provision information to be selected is linked to some of entirety of AV data broadcast so far. In order to indicate linked AV data, for example, the starting time and reproducing time are added to each element. In addition, provision information may be linked to AV data to be broadcast from hereafter.

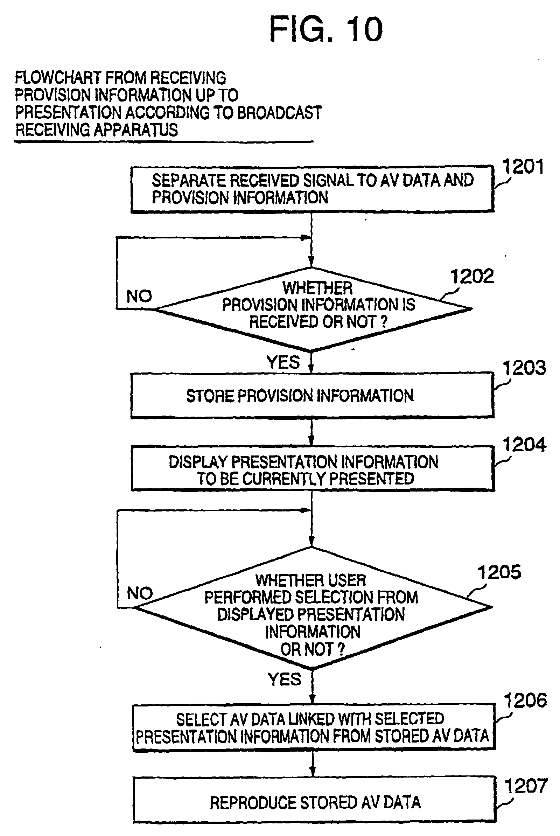

Next, Fig. 10 shows an example of a flow in which the broadcast receiving apparatus 200 receives a broadcast signal (AV data, provision information, and the like) from the broadcast transmitting apparatus 100, and the user selects an arbitrary element from the provision information, and replays AV data corresponding to the selected element. Hereinafter, the explanation is given on the assumption that all broadcasts so far would be stored.

First, the receiving means 201 and separating means 202 of the broadcast receiving apparatus 200 receive a multiplexed broadcast signal (AV data, provision information, and the like) from the broadcast transmitting apparatus 100, and separate the received signal to AV data and provision information, respectively (step 1201). Then, if there is provision information in the received broadcast signals (step 1202), the provision information storage processing means 211 stores presentation information converted to the form that maintains the relationship with multiplexed AV data in time (step 1203). If there is no provision information therein, the presentation information storage processing means 211 is on standby until the reception of provision information (step 1202).

The presentation information selecting means 213 selects presentation information to be currently presented from the presentation information storing means 212, and the presentation information externally outputting means 214 presents the presentation information (step 1204).

Then, in a standby state until the user selects an arbitrary element from the presentation information presented, if the user selects an element (step 1205), the AV data selecting means 205 selects AV data from the AV data storing means 204 based on linking information to AV data described n the selected element (step 1206), and the AV data output controlling means 206 determines that stored AV data is replayed, and the AV data externally outputting means 207 replays the AV data (step 1207).

Therefore, by reproducing stored AV data, which the information provider has intentionally edited, as information relating to AV data, which is currently broadcast when the information provider wishes, the user of the broadcast receiving apparatus 200 can view AV data broadcast so far in a form that reflects the information provider's intention.

For reference sake, in step 1205, the presenting period of presentation information can be controlled by ON/OFF added to the provision information. Namely, when received provision information is ON, display is carried out, and when it is OFF, non-display is carried out. If provision information ON is continuously received, presentation information is updated. In addition, if ON is continuously received, the determination of update may be carried out as considering the version of provision information. Moreover, if the presentation information selected by the user is updated, the old presentation information may be used as it is, or forcibly changed to new one.

For reference sake, in step 1205, the period for displaying presentation information may be set to a certain fixed period or determined based on period control by the broadcast transmitting apparatus 100.

Moreover, in step 1205, the operation may be unconditionally moved to step 1206 without the user's selection to replay AV data.

Further, in step 1205, if presentation information has the hierarchical structure, a step for searching presentation information hierarchically. This hierarchical processing may be performed by the presentation information selecting means 213.

Furthermore, in linking information to AV data in provision information, it is possible to describe an AV data reproducing method such that instructs the order to replay AV data, or if AV data are presented on divided parts of the screen or are presented overlaying one on another.

In addition, it is possible to configure the provision elements such that they indicate not only AV data but also data such as character information stored in the broadcast receiving apparatus, or store data such as character information therein to be provided.

Thus, the use of means for providing intended information when the information provider intends makes it possible to provide the following services to the user.

### 〈Example of services〉

It is assumed that the baseball game is broadcast live, and that AV data of the broadcast of the baseball game so far are stored since the start of the game. Then, it is assumed that a scene is just broadcast in which A player is at bat. Then, the information provider starts to transmit provision information linked to AV data relating to the A player so far as ON. Since this provision information may be one that the information provider wishes to provide to the user, for example, all scenes of A player's at bat so far can be provided by AV data and a profile such as A player' batting average can be provided by character information.

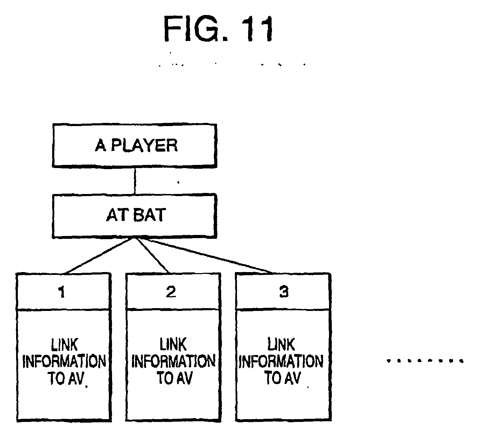

Referring to Fig. 2, in the case where all scenes of A player's at bat are provided by AV data, provision information may be given in a form of "at bat" of "A player" (Fig. 11). The broadcast receiving apparatus 200 replays scenes all scenes of A player's at bat so far from AV data stored so far by use of received provision information, whereby the user can obtain service that information relating to A player can be seen while A player is at bat.

In addition, the content of the service in the form of "at bat" of "A player" differs depending on time when the user wishes to view all scenes of A player's at bat. Namely, if "at bat" of "A player" is selected when A player is at bat the second time, only AV data of A player's first time at bat can be replayed since the information provider has transmitted only provision information linking to AV data of A player's first time at bat. However, when A player is at bat the third time, AV data of A player's first and second times at bat can be replayed since the information provider additionally creates provision information linking to AV data of A player's second time at bat and transmits it. However, when A player left the batter box, the information provider do not have to provide information relating to A player any more. Accordingly, provision information of "at bat" of "A player" is transmitted as OFF, so that the user cannot view AV data of A player so far.

For reference sake, in a case where the user wishes to view all scenes of A player's at bat so far when A player is now in his second turn at bat, the user can view all scenes of A player's at bat in the first and second turns, if provision information is linked to the broadcast AV data not only in his first at bat but also in his second at bat.

Moreover, in the broadcast receiving apparatus, there is a service of "abbreviated viewing". This is the service in which only the noticeable scenes from the stored baseball broadcast so far by the broadcast receiving apparatus are abbreviated and served, if "abbreviated viewing" element of presentation information is selected when "abbreviated viewing" element of presentation information is displayed on the screen. This is on the assumption that the information provider links the noticeable scenes so far to the element of "abbreviated viewing", and the information provider updates the content of the abbreviated viewing whenever necessary by use of the broadcast transmitting apparatus. As a result, the scene a subject to be abbreviated and viewed differs in accordance with the selected time, so that effective abbreviated viewing services are given to the users.

At this time, if the information provider provides information such as "abbreviated viewing " service that the provider wishes to continue providing, the broadcast transmitting apparatus may transmit provision information, serving as an attribute of provision information, wherein "abbreviated viewing" is ON at a program starting time, and may transmit provision information wherein "abbreviated viewing" is OFF only at a program ending time. In addition, for adding providing period information to the element of provision information, that is, "abbreviated viewing", the period from the start and to the end of the program may be added thereto as an attribute of the element of the corresponding provision information. Namely, for a two-hour program, providing period information may add an attribute of "effective for two hours" to the element of provision information.

For reference sake, in a case such as a drama that has already created as a program, the broadcast transmitting apparatus may set the selection timing of AV data and provision information, selection timing in advance of broadcasting the program since selective timing of AV data and provision information is determined.

Using the above mentioned provision information, the following is also possible. That is, for viewing AV data stored so far and viewing AV data of other channels, a point of AV data, which is currently viewed is stored. Then, the reproducing of the stored AV data is started from the stored point of AV data when viewing the same channel next time.

As mentioned above, in this storage type broadcast system the information provider can provide the user with information linked to the program broadcast so far, relating to AV data now on the air, which has been changed depending on providing time and intentionally edited by the information provider. In the broadcast transmitting side can control the information, which the information provider wishes to provide, linking to AV data, which is currently on the air.

In addition, provision information linked to the program broadcast so far is presented as information to be presented simultaneously with AV data, which is currently on the air, and the user arbitrarily selects information therefrom. This allows the user to easily view a portion or the entirety of AV data stored.

The user selects an element arbitrarily from presentation information, which is currently presented, a portion or the entirety of AV data stored in the broadcast receiving apparatus can be replayed based on linking information to AV data, which has been added to the element and which has been intentionally edited by the information provider of the broadcast transmitting apparatus. Then, the user can effectively view the AV data broadcast so far or the AV data now being on the air reflecting the information provider's intention.

### (Second embodiment)

In the a broadcasting system based on storage in consumer platforms of the second embodiment, provision information is transmitted from the broadcast transmitting apparatus to the broadcast receiving apparatus in advance, and enabling information that makes the provision information effective is transmitted thereafter.

In this system, provision information storing means 111, provision information selecting means 112, separating means 202, presentation information storage processing means 211, presentation information storing means 212, and presentation information selecting means 213, which are different from those of Fig. 1 will be explained.

### 〈Configuration of broadcast transmitting apparatus〉

### 〈Provision information storing means 111〉

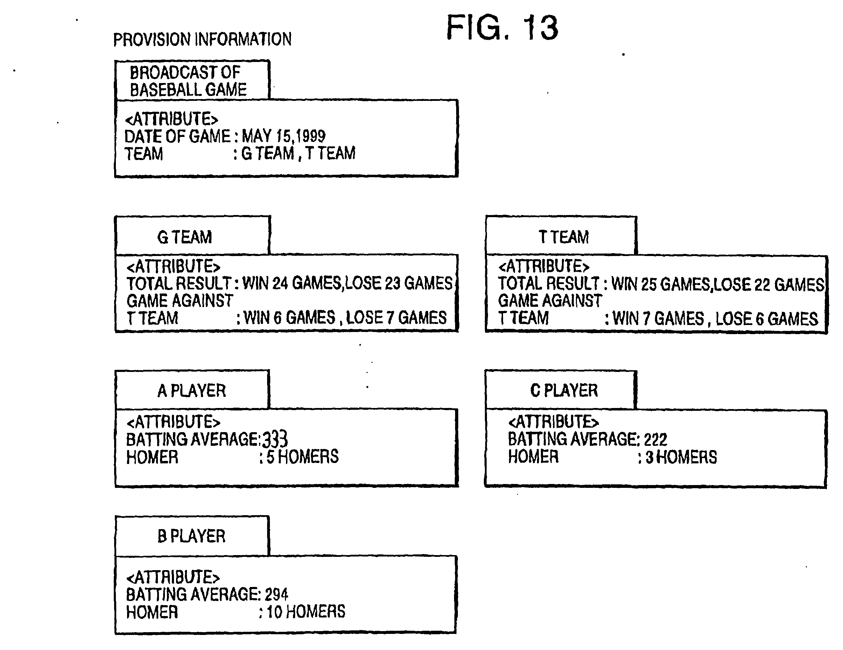

The respective provision elements of provision information stored in the provision information storing means 111 have attributes for searching the provision elements as well as linking information to AV data. For this reason, it is possible to select only a provision element that has an attribute satisfying a certain condition. For example, for providing the search result for the batting average and homer, as shown in Fig. 13, attributes, which denote the balling average and homer of each baseball player by a numeral value, may be added. Moreover, by adding the item of "baseball player" to the attributes of the provision elements such as "batting average" and "profile", the provision elements such as "batting average" or "profile" can be searched. The relationship between the provision elements is included as an attribute. Namely, in a case where the provision element of "at bat" is added to the attribute of the provision element of "A player", a search for "provision element of A player and below" is possible. Thus, using this attribute, the user can search only for the provision element, which the information provider wishes to provide to the user.

Furthermore, similar to the first embodiment, the provision information itself or the respective elements of provision information may include ON/OFF, which makes them effective or ineffective, and time period.

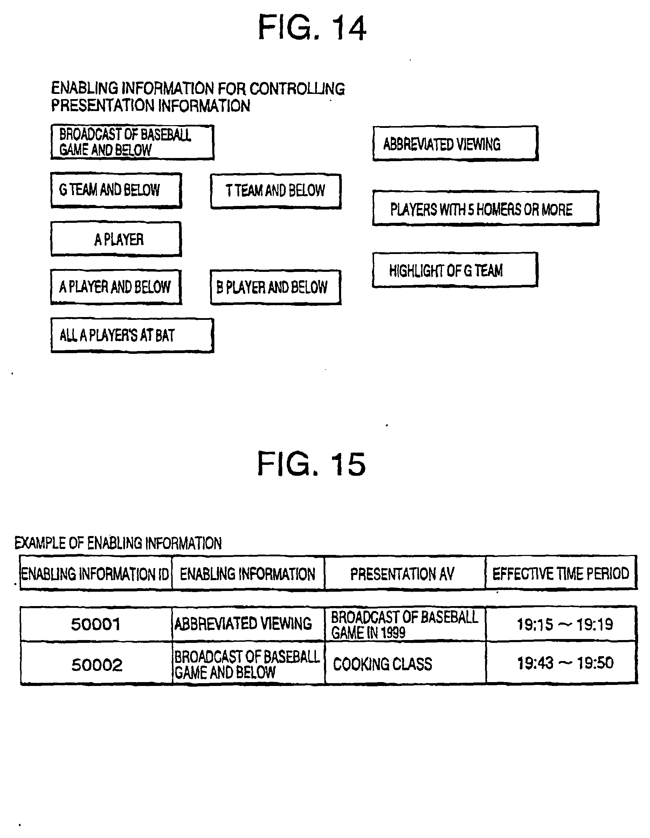

Moreover, the provision information storing means 111 stores controlling information (hereinafter referred to as enabling information, see Fig. 14) that can make a portion or the entirety of the necessary provision information effective. In the aforementioned examples of "baseball player", "at bat", and "profile", "baseball player" is the attribute of provision element, and is also enabling information. Further, "at bat" and "profile" correspond to the provision elements. Furthermore, this enabling information can be input from the outer section. In addition, in enabling information time information may be described, the time information indicating how long the information has been transmitted. Since this time information indicates a correct enabling starting time of the enabling information, enabling information stored may be made effective based on this effective starting time when recording and reproducing are performed in the broadcast receiving apparatus.

### 〈Provision information selecting means 112〉

The provision information selecting means 112 selects two kinds of provision information. Regarding one kind of provision information, all basic provision information is selected from the provision information storing means 111, transmitted to the multiplexing means 103, and the multiplexing means 103 multiplexes the provision information into AV data, which is currently on the air, and the transmitting means 104 transmits the resultant. Regarding the other kind, enabling information is selected from the provision information storing means 111 that can make necessary provision information or a portion or the entirety of the provision elements effective, and the selected enabling information is subjected to multiplexing and transmitting in the same manner as the above.

For reference sake, enabling information can be input externally and be selected, as well as selected from the provision information storing means 111.

Regarding the enabling information, not only the provision elements of provision information but a script having an attribute of provision element as a condition also may be used. For example, "pitcher with 10 or more wins" or "element of A player and below" may be used.

Similar to the transmission timing of provision information of Fig. 4 in the first embodiment, enabling information has ON and OFF modes, if transmission is performed in ON mode, the enabling information remains effective. Then if transmission is performed in OFF mode and the corresponding enabling information is effective, the enabling information becomes ineffective. In addition, similar to the transmission timing of provision information of Fig. 5 in the first embodiment, the effective time period of the enabling information may be described in the enabling information, and the enabling information becomes effective at the receiving side only for that period. Namely, enabling information may be transmitted in advance.

### 〈Configuration of broadcast receiving apparatus〉

### 〈Separating means 202〉

The separating means 202 separates the broadcast signal received by the receiving means 201 into AV data, provision information for providing AV data, and enabling information for selecting a portion or the entirety from provision information.

### 〈Presentation information storage processing means 211〉

The presentation information storage processing means 211 stores basic provision information to the prevent information storing means 212. Then, the presentation information storage processing means 211 sends enabling information to presentation information selecting means 213 when receiving the enabling information.

For reference sake, when enabling information is received, the presentation information storage processing means 211 may store enabling information together with time information to keep the relationship in time with AV data multiplexed simultaneously with the enabling information. Thus, when the AV data is replayed after storing, enabling information multiplexed simultaneously with the AV data being replayed is sent to the presentation information selecting means 213, with reference to time information of stored enabling information.

### 〈Presentation information storing means 212〉

The presentation information storing means 212 stores basic presentation information stored in advance. In the case where enabling information is stored, the presentation information storing means 212 stores enabling information together with AV data identification information (AV to be presented) and time information (effective time period) to keep the relationship in time with AV data multiplexed simultaneously with the enabling information (Fig. 15). Similar to the case in which the presentation information storage processing means 211 stores presentation information in the first embodiment, the effective period of enabling information is stored while updating time information from the ON to OFF mode of enabling information. The respective items (enabling information ID, enabling information, AV to be presented, and the like) of Fig. 15 depend on the AV data managing form, so that they are for the purpose of showing the example. These items may be configured by any combination.

For reference sake, in the presentation information storing means 212, basic presentation information may be combined with time information to be stored. This makes it possible to change basic presentation information for each broadcasting program or depending on time period, and to bring about changes in presentation information to be selected, since basic information to be searched differs from each other even in the same enabling information.

Moreover, presentation information may be created or added originally by the broadcast receiving apparatus 200, or may be composed of the one obtained from other receiving forms (Internet, CATV, and the like), other than being obtained from a broadcast transmission line 401.

### 〈Presentation information selecting means 213〉

The presentation information storage processing means 211 directly sends enabling information to the presentation information selecting means 213, whereby the presentation information selecting means 213 can select effective presentation information from the presentation information storing means 212 based on the enabling information. At this time, it is possible to store enabling information to the presentation information storing means 212 while passing the enabling information directly to the presentation information selecting means 213.

For reference sake, the presentation information selecting means 213 may extract the latest enabling information in time to the presentation information storing means 212 from stored enabling information, and further select effective presentation information from the presentation information storing means 212 based on the extracted enabling information.

Moreover, in the case where the presentation information selecting means 213 selects presentation information from the presentation information storing means 212 based on the enabling information, a general search engine and a natural language processed search engine may be used.

### 〈Specific explanation〉

Next, suppose a model wherein the broadcast transmitting apparatus transmits rough provision information in advance, enabling information for making a portion or the entirety of transmitted provision information effective is selected based on the AV data now on the air, and simultaneously transmitted, and a portion or the entirety is extracted from presentation information stored based on enabling information received by the broadcast receiving apparatus, and is output.

### 〈Example of provision information and that of enabling information〉

Here, an example of provision information transmitted from the broadcast transmitting apparatus is shown in Fig. 2 and 13, and an example of enabling information is shown in Fig. 14. Since the respective elements of this provision information have an attribute of the information together with linking information to the AV data broadcast so far, the respective elements of provision information can be selected only by indicating the provision information itself or pointing out the attribute satisfying a certain condition using enabling information.

For example, if "abbreviated viewing" is transmitted as enabling information by the broadcast transmitting apparatus, only a presentation element of presentation information, that is "abbreviated viewing" becomes effective in the broadcast receiving apparatus, and only one presentation element of "abbreviated viewing" is extracted. Moreover, if "player having batting average .250 or more" is transmitted as enabling information, two or more presentation elements of presentation information such as "A player" and "B player" can be extracted.

### 〈Example of presentation information and example of enabling information〉

Next, the following will explain the examples of presentation information and enabling information in the broadcast receiving apparatus. Presentation information has a form in which the attributes that can be searched and extracted by enabling information as shown in Fig. 14 is added to the presentation elements of Fig. 6 and Fig. 7. Further, in the enabling information stored, identification information of AV data multiplexed simultaneously with the enabling information and the effective time period of the enabling information are stored in the form that they are described in the respective elements (broadcasting of baseball game and the afterward", "abbreviated viewing", and the like) of Fig. 14 (see Fig. 15).

Thus, the information provider transmits provision information in advance. Then, the information provider may transmit only enabling information that can be extracted from the provision information transmitted in advance. This makes it possible to facilitate the information provider's operation. In addition, this makes it possible to reduce the amount of data transmission in real time. There can be considered a method in which provision information and enabling information are transmitted simultaneously and only the effective provision information is extracted from the provision information based on the enabling information.

### 〈Operation flow〉

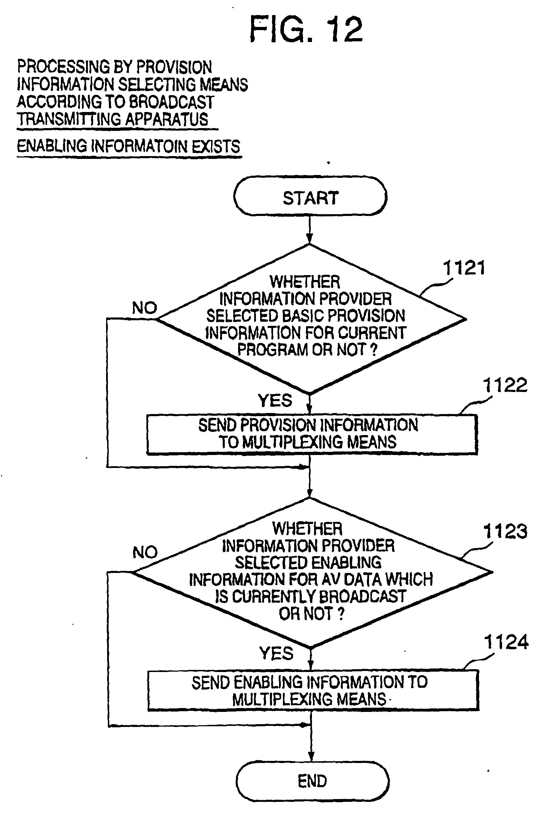

Next, Figs. 8 and 12 illustrate an example of a flow up to transmission of AV data and provision information in the broadcast transmitting. Here, step 1105 of Fig. 8 is shown in Fig. 12. Since Fig. 8 has been already explained, Fig. 12 will be explained here. In Fig. 12, the information provider views the program, which is currently on the air, and selects provision information, which is necessary for the program or AV data at this time, from the provision information storing means 111 by use of the provision information selecting means 112 (step 1121), and the selected provision information is sent to the multiplexing means 103 (step 1122). At the same time, the information provider views the program, which is currently on the air, and selects enabling information, which is necessary for the program or AV data at this time, from the provision information storing means 111 by use of the provision information selecting means 112 (step 1123), and the selected enabling information is sent to the multiplexing means 103 (step 1124). Thus, two kinds of information are sent to the multiplexing means 103.

Thus, the frequency of sending provision information may be low by transmitting provision information and enabling information separately, and an amount of information to be transmitted at the need for providing can be reduced by increasing the frequency of sending enabling information. For example, provision information to be expected in the program is transmitted at only a program starting time, and enabling information may be transmitted in accordance with the content of the program thus providing only necessary provision information.

Next, the following will explain a different point from the first embodiment, with reference to Fig. 10 that illustrates an example of a flow wherein the broadcast receiving apparatus receives the broadcast signal (AV data, provision information, enabling information and the like), the user selects an element arbitrarily from the provision information, then reproducing AV data corresponding to the selected element.

In step 1201 of Fig. 10, adding to the separation between AV data and provision information, separation of enabling information is carried out. In steps 1202, 1203, determination whether or not enabling information is received is performed as well as determination whether or not provision information is received. If the enabling information is received, the presentation information storage processing means 211 stores enabling information in the presentation information storing means 212 in the form that remains the relationship in time with multiplexed AV data, similar to the provision information. In step 1204, the presentation information selecting means 213 selects a portion or the entirety of presentation information from the presentation information of the presentation information storing means 212 by use of enabling information multiplexed into AV data, which is currently output, as a search key, and the presentation information externally outputting means 214 presents the presentation information. Steps 1205, 1206, and 1207 are the same as those of the first embodiment.

Thus, in the foregoing first embodiment, the broadcast transmitting apparatus transmits all the information to be provided to the user when needed, and the broadcast receiving apparatus presents all the information received at this time. On the other hand, in the second embodiment, the broadcast transmitting apparatus transmits all provision information, which will be necessary for the user, in advance. Then, the broadcast receiving apparatus stores the provision information as presentation information. The broadcast transmitting apparatus selects such enabling information that can be used for searching and extracting information to be provided from the presentation information stored in the broadcast receiving apparatus. Then, the broadcast transmitting apparatus transmits the selected information when the need for transmitting arises, whereby the broadcast receiving apparatus can present the information intended by the information provider, when intended.

For reference sake, linking information to AV data, included in each element of provision information, may be AV data currently on the air, or linking information to AV data that will be broadcast hereafter.

### 〈Example of service〉

Suppose that the baseball game is being currently broadcast live. Suppose that the information provider transmits provision information shown in Figs. 2 and 13 from the broadcast transmitting apparatus, upon staring the broadcast of baseball game in advance, and that the broadcast receiving apparatus stores the provision information as presentation information.

Then, it is assumed that a play-by-play announcer is commenting on the home-run derby. Then, supposed that the information provider, who has listened to this voice, selects enabling information (some or entirety of Fig. 14) that is "players with 5 homers or more" in the broadcast transmitting apparatus and transmits it in an ON mode. At this time, the broadcast receiving apparatus receives the enabling information and can extract the presentation element of only players with 5 or more homers using the number of homers of the player as a searching object from the stored presentation elements. Then, only the presentation element can be displayed in a menu form. The user selects an arbitrary presentation element from the players with five homers or more. After that, the broadcast receiving apparatus replays stored AV data, which the information provider of the broadcast transmitting apparatus has edited and which relates to the player corresponding to the presentation element, and user can view the stored AV data relating to the selected player with 5 homers or more. At the instant when the commentary on the home-run derby is ended, the same enabling information as the previous one is sent in an OFF mode, so that "players with 5 homers or more" is non-displayed on the selection menu screen. Then, the information provider transmits the entirety of previous provision information in an OFF mode simultaneously with the end of the program.

For reference sake, in the broadcast transmitting apparatus, selecting timing of AV data, provision information, enabling information may be selected in advance of starting of the program as well as the time when the program is actually broadcasting. Namely, in a case such as a drama that has already created as a program, the broadcast transmitting apparatus may set selecting timing of AV data and provision information in advance, since the selecting timing is also determined already.

Moreover, the broadcast transmitting apparatus may transmit a plurality of provision information itself in advance, and transmit enabling information for searching for provision information itself later, to determine which provision information should be made effective later.

As mentioned above, according to the system of this embodiment, provision information is transmitted in advance from the broadcast transmitting apparatus then enabling information for controlling provision information is multiplexed into real time AV data, and transmitted. This eliminates the need for generating information by the broadcast transmitting apparatus, the information being to be provided to the user when necessary, and only enabling information as a search key needs to be transmitted, so that the amount of provider's operations is reduced. In addition, it is possible to reduce the amount of data, which is multiplexed into AV data and transmitted in real time.

### (Third embodiment)

In the a broadcasting system based on storage in consumer platforms of the third embodiment, work for adding a tag to image and voice data to be broadcast and work for designating what should be broadcast as a reproducing image by use of the tag can be carried out separately.

In the first embodiment, the link is directly established between provision information and the AF data that is to be broadcast as a reproducing image. However, in the case of directly forming a link to AV data from provision information, work for specifying an image to be taken out of AV data to the playback image and work for designating the specified image to the provision information must be carried out simultaneously, thus making it difficult to carry out these works.

The system of this embodiment specifies (cuts) the image to be taken out of AF data into the reproducing image by using "cutting information", and designates provision information by use of the tags for this "cutting information". For this reason, cutting of AV data and selection of provision information can be separated from each other.

In this system, provision information storing means 111, provision information selecting means 112, separating means 202, presentation information storage processing means 211, presentation information storing means 212, and presentation information selecting means 213, which are different from those of Fig. 1 will be explained.

### 〈Configuration of broadcast transmitting apparatus〉

### 〈Provision information storing means 111〉

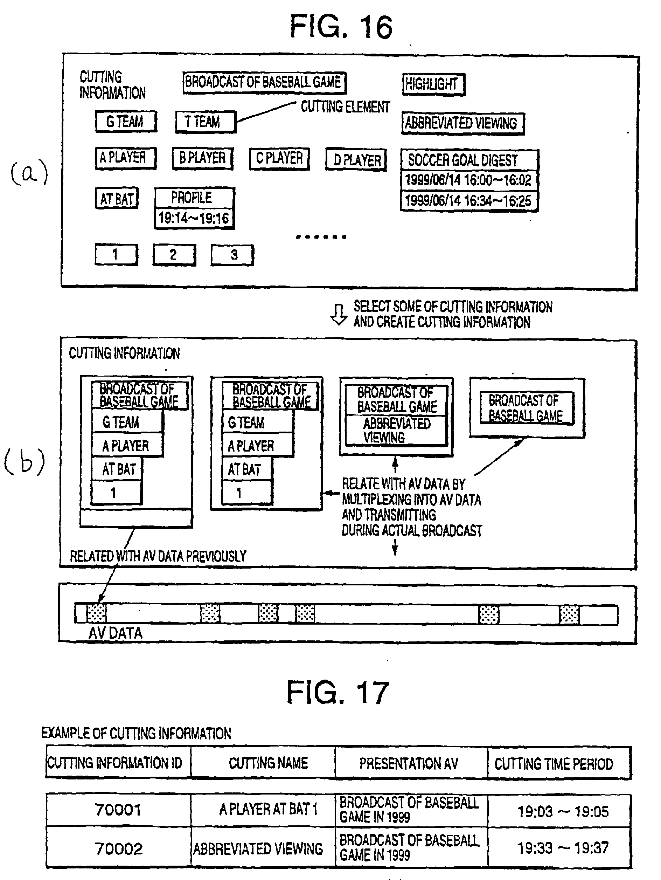

First, the provision information storing means 111 stores information (hereinafter referred to as cuffing information) in which characteristics of the respective stream data of AV material is described as well as provision information and enabling information. An example of the cutting information is shown in Fig. 16(a). The cutting information is information that serves as a mark for cuffing AV data, and is described based on objects and phenomena such as a person and a landscape and an object appeared on the screen, music, voice, smell, and the like that people can feel. For example, in a case where A player, B pitcher, C catcher, D umpire are displayed on one screen at the same time, AV data of this scene is composed of elements (hereinafter referred to as cutting elements) of cutting information including A player, B pitcher, C catcher, D umpire.

Moreover, in order to link AV data and the cutting element to each other, the linking is performed at timing when they are multiplexed. Namely, AV data and cutting element, which are simultaneously multiplexed, are linked. In addition, time information how long the information has been transmiffed may be described in the cutting information. Since this time information is correct cutting starting time of the cutting information, effectiveness of stored cutting information is determined based on this cutting starting time when the cutting information is recorded and replayed by the broadcast receiving apparatus.

For reference sake, linking to AV data may be described in the cutting information in advance.

### 〈Provision information selecting means 112〉

The provision information selecting means 112 has means that can select two or more arbitrary cutting elements simultaneously from the cutting information stored in the provision information storing means 111, and the information provider can select the cutting element arbitrarily from the cutting information by use of this means. If the selection of the cutting elements is performed by the information provider, the provision information selecting means 112 combines selected two or more cutting elements, and sends the resultant to the multiplexing means 103 as cutting information.

For reference sake, cutting information wherein two or more cutting elements are combined as in Fig. 16 (c) is stored in the provision information storing means 111 in advance and the information provider may select the cutting element therefrom.

Moreover, instead of selecting the cutting information externally by the information provider, it is possible to use the configuration wherein the provision information selecting means 112 automatically selects the cutting information in response to information of AV data, which will be transmitted hereafter or is being transmitted, and in association with the information of the AV data,

Furthermore, in a case where the cutting information for cutting AV data keeps the same during a fixed range of time period, the same cutting information is transmiffed at a fixed cycle, and information showing the end of the cutting information is transmiffed at a cutting end time. This is the same as the transmission form that uses the ON/OFF mode of provision information in the first embodiment.

Moreover, the following is also possible, that is, when period information showing a fixed period is added to cutting information and the cutting information is transmiffed, AV data is cut by the same cutting information for this period.

In addition, cutting information, which has already broadcast, may be transmitted simultaneously when cutting information relating to the broadcast cutting information is transmitted. Namely, cutting information for cutting the scene of A player's first time at bat may be always transmitted when A player is at bat the second time and the third time.

### 〈Configuration of broadcast receiving apparatus〉

### 〈Separating means 202〉

The separating means 202 separates the broadcast signal received by the receiving means 201 into AV data, provision information for providing AV data, and cutting information for cutting AV data.

### 〈Presentation information storage processing means 211〉

The presentation information storage processing means 211 receives provision information for providing AV data and cutting information for cutting AV data, which have been separated by the separating means 202, and stores them into the presentation information storing means 212.

At the time of storing cutting information to the presentation information storing means 212, if AV data identification information such as a channel a time period associated with AV data, is described in the cutting information, the information is stored thereto directly. Or, the cutting information is converted to information that can be recognized by the broadcast receiving apparatus originally, and the converted information is stored thereto. Moreover, there is a case wherein only identification information such as a name is described in the cutting information and no information associated with AV data is described therein as in the case wherein enabling information is stored in the second embodiment. In this case, the presentation information storing means 212 stores the cutting information together with AV data identification information (AV to be presented) and time information (cutting time period) to keep the relationship in time with AV data multiplexed simultaneously with the cutting information (see Fig. 17). Similarly to the case in which the presentation information storage processing means 211 stores presentation information in the first embodiment, the cutting period of cutting information is stored while updating time information from the ON to OFF mode of cutting information. Whereby, when certain cutting information is selected, AV data multiplexed simultaneously with the cut information can be replayed. The respective items (cutting ID, cutting name, AV to be presented, and the like) of Fig. 17 depend on the AV data managing form, so that they are for the purpose of showing the example. These items may be configured by any combination.

### 〈Presentation information selecting means 213〉

The presentation information selecting means 213 selects presentation information from the presentation information storing means 12, the presentation information having been multiplexed simultaneously with AV data currently outputting and been transmiffed, and the presentation information externally outputting means 214 externally outputs in the menu form.

Moreover, the presentation information selecting means 213 has means that can externally select the presentation information stored in the presentation information storing means 212. Therefore, the user can select an arbitrary presentation element from the presentation information of menu form, which has been externally output. Then, if the user selects the presentation element, the presentation information selecting means 213 extracts cutting information added to the presentation element or the cutting element. The presentation information selecting means 213 sends linking information to AV data, which has been added to the cutting information or the cutting elements and which has been stored so far, toward the AV data selecting means 205. This allows the AV data selecting means 205 to select AV data from the AV data storing means 204 and to output the designated AV data.

Thus, the broadcast receiving apparatus can associate presentation information and AV data with each other by use of cutting information as an intermediation.

For reference sake, as a method for selecting the presentation information stored in the presentation information storing means 212, a means can be configured so that the element of presentation information is automatically selected instead of the external input. In this case, the selection method such as a selection order is described in the presentation information itself, and once an element of the presentation information is selected, the presentation element is automatically selected in order of the description sequentially thereafter.

As mentioned above, since the broadcast transmitting apparatus can use the cuffing information as linking information to AV data, only the cutting information needs to be mapped to the provision information, without any attention to be paid to the configuration of the program. In addition, since the cutting of AV data and the provision timing of AV data are separated, the transmission operation can be simplified. Moreover, even in the broadcast receiving apparatus, the cutting information intermediates between the presentation information and AV data, so that this eliminates the need for connecting information of AV stream data to the presentation information, consequently making it possible to customize data easily by adding only the cutting information to the presentation information.

### 〈Example of service〉

Supposing that the broadcasting of baseball game is relayed live, A player's first turn at bat is already ended, and A player's second turn at bat is almost started. Moreover, it is assumed that information as illustrated in Fig. 16 is stored in the provision information storing means 111 of the broadcast transmitting apparatus. At this time, one information provider selects cutting elements such as "broadcasting of baseball game", "G team", "A player", "at bat", "2", and the like from the cutting information, combines them, and continues to transmit the combined cutting elements as cutting information in an ON state while the scene of A player's second turn at bat is broadcasting. Whereby, AV data corresponding to the scene of A player's second turn at bat is managed as AV data having cutting elements such as "broadcasting of baseball game", "G team", "A player", "at bat", "2", and the like in the broadcast receiving apparatus. Moreover, another information provider transmits provision information relating to "A player" combined with this cuffing information without concern for editing of AV data. Whereby, the user of broadcast receiving apparatus can obtain information of "A player" when "A player" is "at bat".

Namely, when A player is at bat the second time, the broadcast transmitting apparatus transmits provision information as shown in Fig. 2 simultaneously with the transmission of cutting data of AV data. In the broadcast receiving apparatus, the user can view the scene of A player's at bat so far when information appears on the screen in the menu form. In addition, by transmitting enabling information that makes only the information of A player effective, only the information of "A player" and afterward is presented, and the user can select only the information of "A player". For reference sake, when "A player" finished his turn "at bat", cutting information OFF is transmitted.

Moreover, the user shoots AV data relating to A player voluntarily and adds cutting information of "A player" to create the AV data, so that the user can select AV data of A player shot by the user voluntarily when A player is at bat as heretofore.

As mentioned above, the broadcast transmitting apparatus can carry out work for cutting AV data and work for selecting provision information separately, so that the work of information provider can be shared and information can be provided efficiently. Furthermore, in the broadcast receiving apparatus, the user can easily carry out edition agreeable to the user's taste in order to clarify the relationship between the presentation information and the cutting information. Moreover, in the broadcasting system, the user can obtain information intended by the information provider, when intended.

### (Fourth embodiment)

In the a broadcasting system based on storage in consumer platforms of the fourth embodiment, the display form of the image that is presented based on provision information is changed to a case of real time viewing in the playback viewing after storage.

In this system, the following will explain the provision information storing means 111 of Fig. 1, which is different from that of the first embodiment.

### 〈Provision information storing means 111〉

Provision information stored in the provision information storing means 111 of the broadcast transmitting apparatus has information for reproducing AV data broadcast so far and the attribute of the information. Then, playback control after the provision information is stored is described in the attribute.

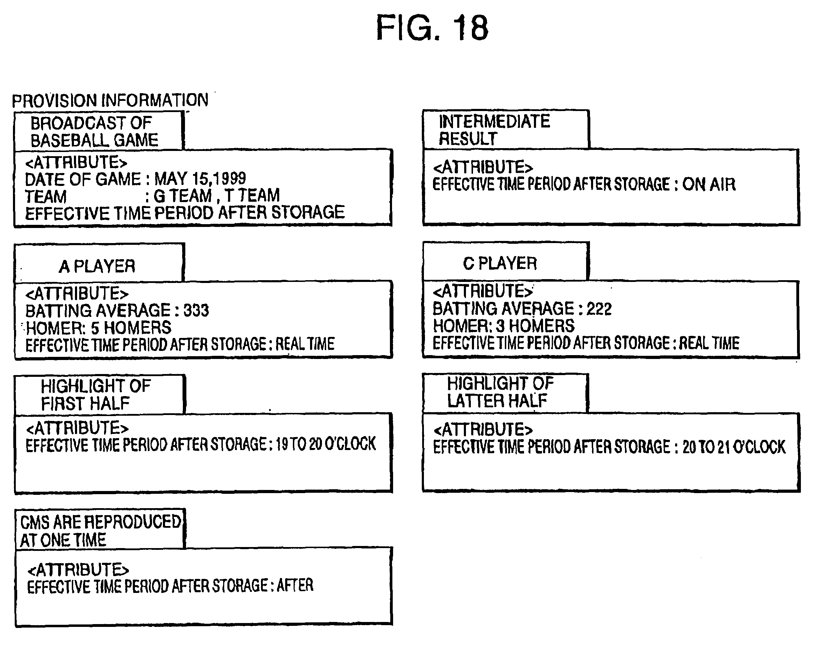

For example, the provision information should be displayed to keep the relationship with AV data broadcast at the same time in real time broadcasting ("real time" in Fig. 18). Or, although the provision information is associated with AV data broadcast at the same time in real time broadcasting, after the storage, such a relationship should be ignored and a different standard is presented, and the like.

Regarding a different standard, there are examples such as that the provision information is always displayed ("ON AIR" of Fig. 18), or the provision information, which has been once viewed, is always displayed ("VIEW" of Fig. 18), or a time period is designated and the provision information is made effective for this time period ("20 to 21" of Fig. 18), or, the provision information is made effective after the storage ("AFTER" of Fig. 18), and the like.

### 〈Example of service and that of operation〉

Suppose that there is a program from 19:00 to 21:00 and that provision information, that is, an "intermediate result is broadcast at the time of 20:00. At this time, if the program is replayed after the end of this program, the provision information, "intermediate result" can normally obtained at the time only after a lapse of one hour since the start of the program.

Assumed that the effective period after the storage of the provision information, that is, "entirety of program" or "effective from the start of program to the end of program after storage" ("ON AIR" of Fig. 18) is described in this provision information. With this assumption, however, the presentation information of "immediate result" that is to be presented for the first time when it is 20:00 in the real time broadcasting, will be presented from the start to the end of the program when this program is replayed after the end of broadcasting.

Moreover, another example will be explained. Suppose a case in which the user wishes to view the scene of A player's first turn at bat at the time when A player is at bat the third time. At this time, it is assumed that the user rewinds AV data so far and views the scene of A player's first turn at bat. In this case, there are two cases; one in which presentation elements of A player's "second at bat" and "third at bat" may be displayed on the screen, and the other case in which they may not be displayed thereon. The former case means that the presentation elements corresponding to "second at bat" and "third at bat" which have been already replayed and viewed one time, are displayed if an attribute of "provision information to AV data that is once viewed is made effective" ("VIEW" of Fig. 18) is added as an attribute of the provision information. Moreover, the latter case means that the presentation elements corresponding to "second at bat" and "third at bat" are not displayed at the time when the first turn at bat is replayed if an attribute of "display to keep the relationship with AV data broadcast at the same time in the real time broadcasting" ("REAL TIME" of Fig. 18).

Furthermore, there is an example wherein presentation information that is made effective only when the stored program is replayed ("AFTER" of Fig. 18). There is a case wherein a program including commercials (CMs) is replayed as it was actually broadcast. However, when the program and commercials are stored and managed separately and replayed, it is possible to change the way to replay the program after the storage by use of the provision information such that commercials are placed at random (in view of time, geometry, and the like) instead of reproducing the program as if it was actually broadcast. Namely, the following service can be considered. More specifically, provision information of "CMs are replayed at one time" is made effective when the playback of stored program is started. Then, if the user selects it, CMs to be broadcast in the program are first replayed at one time, and thereafter the main part of the program is replayed.

For reference sake, the above can be realized by transmitting enabling information that makes provision information of "CMs are replayed at one time" effective using enabling information of the second embodiment after the end of the corresponding program.

As described above, the description of playback control after the storage as an attribute of provision information makes it possible to provide AV data once stored and presentation information at timing other than provide timing of the information provider transmitted in real time. Moreover, the program is stored, so that the user can freely view previous information of the program by the stored presentation information.

### (Fifth embodiment)

In the a broadcasting system based on storage in consumer platforms of the fifth embodiment, the range of information, which is presented with presentation information, is limited by the user's intension and viewing history.

In the system of the fifth embodiment, the presentation information selecting means 213 of Fig. 1, which is different from that of the first embodiment, will be explained.

### 〈Presentation information selecting means 213〉

The presentation information selecting means 213 has means that can select the provision information stored in the presentation information storing means 212 externally or make it effective. Namely, the user can make a rule for selecting presentation information or making it effective. Moreover, the configuration wherein the previous rule is automatically created or changed based on the user's view history may be used.

Here, some examples of the rule for selection are given. For example, provision information including a key word selected from key words input by the user or from key words as shown in Figs. 2 and 14, is presented on a higher priority basis, or inversely is, not presented on a higher priority basis. Or, although a rule for selection can be made such that a name of program, which is often viewed, is registered as a key word, and only information relating thereto is presented.

For reference sake, instead of changing the rule for selection in the presentation information selecting means 213, means may be provided for editing presentation information itself stored in the presentation information storing means 212, whereby presentation information may be edited on the broadcast receiving apparatus side.

Moreover, a rule may be provided such that presentation information is stored in the presentation information storing means 212 in the presentation information storage processing means 211, thus sifting presentation information at the storing time.

### 〈Example of service due to user's input〉

First, an example is given of a case in which the rule for selection set by the user is reflected upon the selection of presentation information by the presentation information selecting means 213.

It is assumed that the baseball game is broadcast live. Moreover, supposed that a scene wherein A player is at bat is broadcast similarly to the foregoing embodiment. At this time, the information provider starts to provision information of A player of G team, S pitcher of T team, H catcher thereof, as provision information. However, since the user has a great interest in team T, the user needs only the information of S pitcher and H catcher than that of A player at this time. Then, the user sets a rule to give a higher priority to team T as a rule for selection of presentation information. As a result, only the presentation elements of S pitcher of team T and H catcher thereof are displayed on the screen even if A player of team G is at bat. Thus, information of T team, which is necessary for the user, can be obtained on a higher priority from information that is provided by the information provider.

For reference sake, the user's taste may be extracted from the user's inputs so far or from the view history, thus setting the rule for selection automatically such that the resultant is reflected thereon.

### 〈Example of service using view history〉

Next, an example is explained of a case wherein the view history of user is reflected on the selection of presentation information by the presentation information selecting means 213.

It is assumed that the broadcasting of the baseball game is broadcast live. Moreover, suppose that the user has not been viewing from the beginning and that the user did not view CM broadcast in the beginning. Then, the information provider transmits provision information of "automatic playback of unviewed CM" just when the defensive team is changed. The broadcast receiving apparatus that has received this provision information makes this provision information ineffective if there is no CM that is unviewed with reference to the users' view history. The broadcast receiving apparatus makes this provision information for presenting CM effective if there is a CM that is unviewed, and starts to replay the CM that is unviewed automatically. Namely, the information provider can provide the services that can show the entire of the program to the user, using a vacant time in the content of the program.

For reference sake, the above can be applied to the reproducing of a specific AV data when reproducing of the program recorded is performed after the end of the broadcasting of the baseball game. In other words, provision information of "automatic playback of unviewed CM" is sent to some scenes in through the program, and the provision information is set effective only when reproducing the program ("AFTER" of Fig. 18). As a result, it is possible to control CM viewing based on the user's view record even while reproducing.

Moreover, it is assumed that the program commercial of this program is broadcast before the program is broadcast. Then, the information provider transmits provision information of "Applying for prize if viewing program commercial" upon the end of the program. The broadcast receiving apparatus that has received this provision information makes the presentation information ineffective when the program commercial has not been viewed, with reference to the user's view history. Moreover, the broadcast receiving apparatus makes the presentation information effective when the program commercial has been viewed. As a result, only for persons who have viewed the program commercial, presentation information will be displayed, showing the application method for the prize, after the end of the program. Further, it is possible to display the key word for a prize appearing in each scene, at one time, in association with the displaying of the application method.

As mentioned above, provision information sent from the broadcast transmitting apparatus is converted to presentation information by the broadcast receiving apparatus, and the broadcast receiving apparatus can fix enabling information that makes only the limited presentation information effective. This makes it possible to reflect the information provider's intension and to present available information for the user. Moreover, even if presentation information is stored in the broadcast receiving apparatus, the information provider of the broadcast transmitting apparatus transmits enabling information for extracting information while is to be currently provided, whereby narrowing the range of presentation information. Furthermore, the user of the broadcast receiving apparatus can fix enabling information that makes only the limited presentation information effective. This makes it possible to reflect the information provider's intension and to present available information for the user.

### (Sixth embodiment)

In the a broadcasting system based on storage in consumer platforms of the sixth embodiment, if information designated by provision information is not stored in the broadcast receiving apparatus, the broadcast receiving apparatus obtains it from the database storing the corresponding information therein, and displays it.

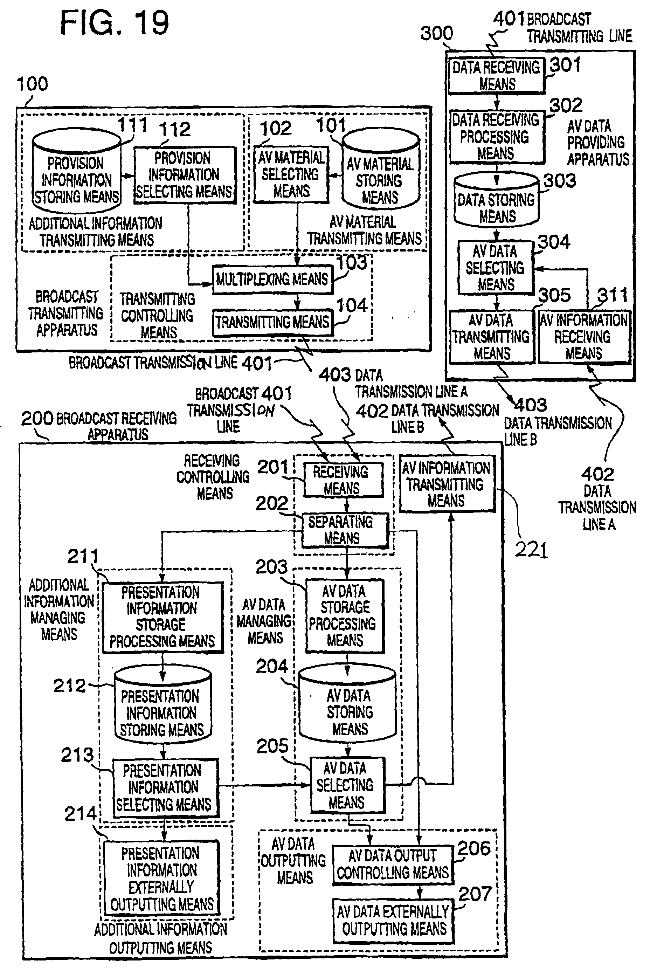

Fig. 19 shows apparatus to compose the broadcasting system of the sixth embodiment, namely a broadcast transmitting apparatus 100, a broadcast receiving apparatus 200, and an AV data providing apparatus 300 for storing all the AV data. The broadcast transmitting apparatus 100 is the same as that of Fig. 1, and the broadcast receiving apparatus 200 is the same as the broadcast receiving apparatus of Fig. 1, but including an AV information transmitting means 221. The AV data providing apparatus 300 stores all data received from the broadcast transmitting apparatus 100, and when the provision of data is required from the broadcast receiving apparatus 200, the AV data providing apparatus 300 transmits the corresponding data to the broadcast receiving apparatus 200.

These broadcast receiving apparatus and AV data providing apparatus will be specifically explained.

### 〈Broadcast receiving apparatus〉

First, in the broadcast receiving apparatus of Fig. 19, the receiving means 201, separating means 202, AV data storage processing means 203, presentation information storage processing means 211, AV data selecting means 205, which are different from those of the first embodiment, and the AV information transmitting means 221, which is newly added, will be explained.

### 〈Receiving means 201〉

The receiving means 201 can receive AV data and presentation information through a data transmission line B 403 simultaneously through a broadcast transmission wave 401.

For reference sake, the broadcast transmission wave 401 and data transmission line B403 may be one and the same transmission line.

### 〈Separating means 202, AV data storage processing means 203, presentation information storage processing means 211〉

Since the receiving means 201 receives AV data and presentation information through the transmission lines of two routes mentioned above, data from the two routes are sent to the separating means 202, the AV data storage processing means 203, and the presentation information storage processing means 211 simultaneously. Each means processes data in the same manner, and data from the two routes are stored in the AV data storing means 204 and in the presentation information storing means 212 in the same manner.

### 〈AV data selecting means 205〉

The AV data selecting means 205 automatically generates information (hereinafter referred to as AV information) for identifying AV data of a portion to be replayed when AV data, which is currently to be replayed, is not presented in the AV data storing means 204, and sends the generated information to the AV information transmitting means 221. Here, any information may be used as AV information if it is identification information that can determine a portion or the entirety of the program uniquely. For example, time and date of broadcasting, broadcasting station, name of program, program start time, program end time, and the like may be combined with each other, and if a program can be specified only with a program ID, only the program ID may be used.

AV information is automatically generated herein, and any trigger for generating AV information may be used. Therefore, generation of AV information may be performed manually.

### 〈AV information transmitting means 221〉

AV information transmitting means 221 receives AV information from the AV data selecting means 205, and transmits it through a data transmission line A402. For the data transmission line A402, Internet using a telephone line, and a fixed-line cable for CATV, and the like can be employed. At this time, identification information for identifying the broadcast receiving apparatus itself may be transmitted simultaneously. This is used in a case wherein the transmitting side specifies the receiving side and transmits AV data thereto. Therefore, there is no need for information to identify the receiving apparatus, in a case where a broadcasting wave employed can transmit designated AV data to the receiving apparatus required, even if the receiving side is not specified.

### 〈AV data providing apparatus 300〉

Next, the configuration of AV data providing apparatus 300 of Fig. 19 will be explained.

### 〈Data receiving means 301〉

The data receiving means 301 receives a broadcast signal to be broadcast to the broadcast transmission wave 401. The broadcast signal in which AV data and provision information are multiplexed is transmitted to this broadcast transmission wave 401 from the transmitting means 104 of the broadcast transmitting apparatus 100. For reference sake, there is a case in which only AV data is used as a broadcast signal.

### 〈Data storage processing means 302〉

Data storage processing means 302 manages the broadcast signal that is received by the data receiving means 301, by storing it in the data storing means 303. In the case where AV data and additional information (provision information, enabling information, cutting information and the like) accompanying with AV data are multiplexed as a broadcast signal, there are two storing methods; one is that they are separated from each other, stored and managed, and the other is that the broadcast signal is directly stored and managed as a stream. The storage management may be performed by either method. At this time, identifiers that can fix the data uniquely are assigned simultaneously to AV data and to additional information accompanying with AV data, then the resultant are stored. This makes it possible to extract a portion or the entirety of a certain specific program.

### 〈Data storing means 303〉

The data storing means 303 is a storage medium that stores AV data and additional information from the data storage processing means 302. A memory, HDD, PD, MD, MO, DVD-ROM, DVD-RAM, DAT, D-VHS, and the like can be used as a storage medium.

### 〈AV information receiving means 311〉

An AV information receiving means 311 receives AV information that uniquely identifies AV data from the data transmission line A402, and sends it to the data selecting means 304. This AV information is one that is transmitted form the foregoing AV information transmitting means 221, and identification information that can specify a portion or the entirety of the program broadcast so far from the broadcast transmitting apparatus.

### 〈Data selecting means 304〉

The data selecting means 304 extracts a portion or the entirety of the program, which has been broadcast so far and stored in the data storing means 303, based on AV information from the AV information receiving means 311, and transmits them to the data transmitting means 305. Moreover, if data stored in the data storing means 303 is managed separately as AV data and additional information accompanying with AV data, they are multiplexed and sent to the data transmitting means 305.

### 〈Data transmitting means 305〉

The data transmitting means 305 transmits data received from the data selecting means 304 to the broadcast receiving apparatus 200. In transmitting the data, the broadcast wave used between the broadcast transmitting apparatus 100 and the broadcast receiving apparatus 200 is utilized, also Internet using a telephone line, and a fixed-line cable for CATV, and the like can be employed.

In the case where a data transmission line B403 transmits data to each receiving apparatus, for example, on the Internet using the telephone line, it also receives information that can identity the receiving apparatus, which has transmitted AV information, and performs the transmission thereto, differently from the case where the data transmission line B403 transmits data to many receiving apparatuses as in the broadcast transmission wave 401.

Moreover, in the case where the data transmission line B403 transmits data to many receiving apparatuses as in the broadcast transmission wave 401, the following form may be used. More specifically, there is provided in means for scheduling when and where the data is transmitted, and trigger information, which shows a transmitting schedule, is transmitted to the broadcast receiving apparatus, and the broadcast receiving apparatus that has received the trigger information fetches required AV data and additional information accompanying with AV data again.

### 〈Operation flow〉

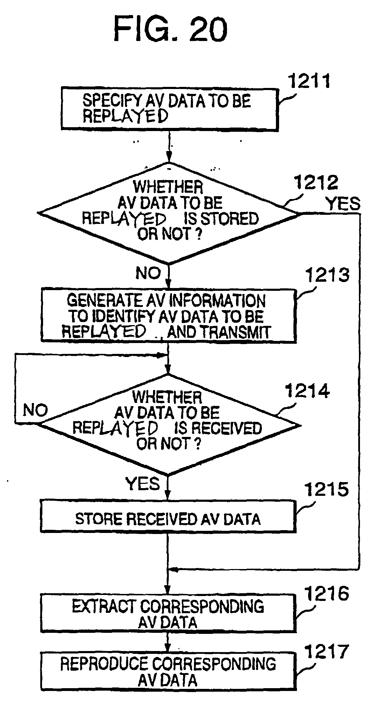

Next, with reference to Fig. 20, the following will explain a flow wherein the AV data selecting means 205 of the broadcast receiving apparatus generates necessary AV information, the AV information transmitting means 221 transmits the AV information, so that the corresponding AV data is received, and replayed. Herein, the following will be explained on the precondition that AV data and provision information so far are not stored at all.

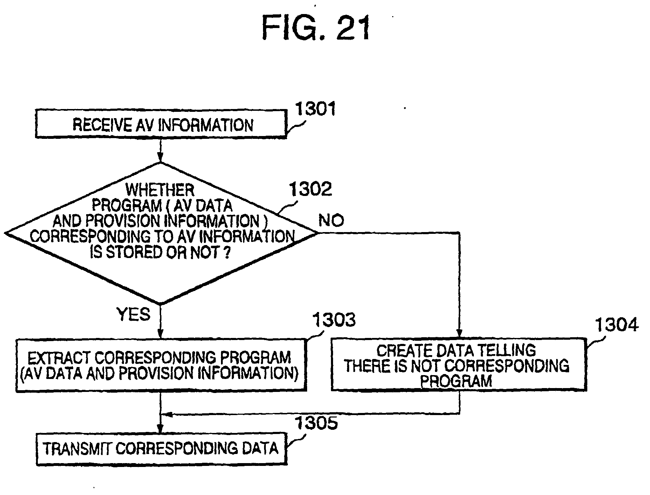

First, an instruction to replay AV data is generated (step 1211). This instruction is directly performed by the user or it is generated based on the presentation information. Then, the AV data selecting means 205 searches whether or not designated AV data exists in the AV data storing means 204 (step 1212). If AV data exists, the AV data is extracted (step 1216), and replayed (step 1217). On the other hand, if no AV data exists, AV information for identifying designated AV data is created, and the AV information transmitting means 221 transmits it (step 1213). As a result, the AV data providing apparatus 300 transmits the corresponding AV data through the data transmission line B402 (Fig. 21, to be explained later). Then, the AV data storage processing means 203 is on standby until the receiving means 201 receives the corresponding AV data from the data transmission line B402, and if the corresponding AV data is received (step 1214), the AV data storage processing means 203 stores it to the AV data storing means 204 (step 1215). Then, the AV data selecting means 205 extracts the AV data, which is originally designated, (step 1216), and replayed (step 1217).

For reference sake, the apparatus for receiving data is not necessarily mounted on the previous broadcast receiving apparatus, and another data receiving apparatus may be placed.

Next, with reference to Fig. 21, the following will explain a flow wherein the AV data providing apparatus 300 foregoing AV data transmitted by the AV information transmitting means 221 of the broadcast receiving apparatus, and transmits a portion or the entirety of the program broadcast so far.

First, the AV information receiving means 311 receives AV information transmitted from the broadcast receiving apparatus 200 (step 1301). Then, the data selecting means 304 that has received the AV information searches whether or not the corresponding AV data or provision information exists in the data storing means 303 (step 1302). If no corresponding data exists, the notification that no data exists is transmitted (steps 1304, 1305). If the corresponding data exists, the AV data and additional information accompanying with the AV data or either one of them is extracted from the data storing means 303 (step 1303), and converted to a format of the data transmission line B403 and transmitted (step 1305).

For reference sake, as the transmission line, the broadcast transmission line 401, the data transmission line A402, and the data transmission line B403 may be the same as each other, or different from each other, or combinations of these may be the same as each other.

### 〈Example of service〉

It is assumed that the broadcasting of baseball game is broadcast live. Then, supposed that the broadcast receiving apparatus takes a form in which the storage of the program starts after the user starts to view the program, and that the content of the broadcasting of baseball game so far is not stored at all. However, the AV data providing apparatus stores all of the contents of the program so far. Then, when the scene wherein A player is just at bat is broadcast, the information provider starts to transmit provision information of A player linked to AV data so far in ON mode. When A player is at bat, the user replays the scenes of A player's at bat broadcast so far based on the provision information received by the broadcast receiving apparatus. This allows the user to receive service in which the user can view information of A player.

However, in this case, all the scenes of A player's at bat so far are not stored. Here, information of all the scenes of A player's at bat so far is transmitted to the AV data providing apparatus 300 as AV information. For example, since linking information to AV data is added to the presentation information, the information is transmitted directly (AV data linking information of the presentation element configuration of Fig. 6). The AV data providing apparatus 300 has the storage medium with a large capacity where all programs broadcast so far are stored, and the broadcast receiving apparatus receives only the corresponding AV data automatically from this AV data providing apparatus. This allows the broadcast receiving apparatus to replay all the scenes of A player's at bat therefore the user can view all the scenes of A player's at bat so far.

For reference sake, the AV data providing apparatus may be used as an internal configuration of any one of the broadcast transmitting apparatus and the broadcast receiving apparatus, and also be one or more AV data providing apparatuses provided as another apparatus. For example, for a plurality of broadcast transmission waves 401 including local stations, the AV data providing apparatus may receive and manage a plurality of broadcast transmission waves and AV data of a plurality of local stations. In addition, if there is a broadcast receiving apparatus having a large storage medium, the broadcast receiving apparatus possesses the function of the AV data providing apparatus. This allows the broadcast receiving apparatus having a small storage medium to obtain only necessary AV data from the broadcast receiving apparatus having a large storage medium.

Thus, there are cases wherein AV data to be replayed does not exist in the broadcast receiving apparatus, when the broadcast receiving apparatus itself has such a mechanism that can store the entirety of the program or the storage medium is not so large. Fore these cases, if the AV data providing apparatus that stores the entirety of the program is configured in the broadcasting system, the information provider of the broadcast transmitting apparatus can provide the service without concern for the function of the broadcast receiving apparatus. In addition, the AV data providing apparatus is separated from the broadcast transmitting apparatus, whereby making it possible to manage AV data in various broadcast transmitting apparatuses and to supply the AV data to the broadcast receiving apparatus. Moreover, the user can automatically obtain necessary data as required, and this allows the user to receive the service provided by the information provider similar to the broadcast receiving apparatus having the storage medium with a large capacity.

### [Effect of invention]

As is obvious from the above explanation, according to the broadcast transmitting apparatus of the present invention, the information provider can provide the provision information, which changes with providing time and is linked to AV data which has been intentionally edited by the information provider, to the user as information relating to AV data, which is currently broadcasting. Moreover, the broadcast transmitting side can control information to be desirably provided in accordance with to the content of the program, which is currently broadcasting.

Furthermore, the broadcast receiving apparatus presents presentation information linked to AV data as information to be presented simultaneously with AV data multiplexed at the same time, and the user arbitrarily selects the element of the presentation information. This allows the user to view a portion or the entirety of stored AV data linked to the element.

Moreover, even when the user replays the stored AV data, the user can catch up with the program, which is currently broadcasting, because the AV data, which is currently broadcasting, is also stored at the same time.

Furthermore, the a broadcasting system based on storage in consumer platforms of the present invention presents presentation information linked to AV data, as information to be presented simultaneously with AV data multiplexed at the same time, and the user arbitrarily selects the element of the presentation information. This allows the user to view a portion or the entirety of stored AV data linked to the element.

Moreover, even when the user replays the stored AV data, the user can catch up with the program, which is currently broadcasting, because the AV data, which is currently broadcasting, is also stored at the same time.

Namely, the user, who views the program from halfway, can view the program from the beginning efficiently, also can view the past programs effectively.

Moreover, the user can receive the service wherein the broadcasting program so far is abbreviated and viewed based on the intended content when the broadcast transmitting side intends.

Further, in the system for transmitting enabling information from the broadcast transmitting apparatus, a portion or the entirety of the provision information is transmitted from the broadcast transmitting apparatus in advance. Then, at the time of providing information relating to the content of the program, which is currently broadcasting, only the enabling information for searching and extracting the elements of the provision information that is made effective from the provision information linked to AV data broadcast so far may be transmitted. This reduces the number of operator's operations for providing information. In the broadcast receiving apparatus, the user can obtain only the provision information that is made effective by the information provider at this time, and can view a portion or the entirety of AV data stored so far based on the information. In addition, it is possible to reduce the amount of data, which is multiplexed into AV data and which is transmitted in real time.

According to the system for cutting the broadcasting program by use of cutting information, the broadcast transmitting apparatus can carry out work for cutting AV data and work for selecting provision information separately, so that the work of information provider can be shared and information can be provided efficiently. Furthermore, in the broadcast receiving apparatus, the user can easily carry out editing agreeable to the user's taste in order to clarify the relationship between the presentation information and the cutting information. Moreover, in the broadcasting system, the user can obtain information intended by the information provider, when intended.

Furthermore, in the system wherein the presenting method after storing the provision information is described as an attribute of provision information, it is possible to provide AV data and presentation information once stored even at timing other than providing timing by the information provider as in real time. Moreover, the program is stored, so that the user can freely view previous information of the program by using the stored presentation information.

Moreover, according to the broadcast receiving apparatus, in one that makes it possible to change the rule for selection of the AV data selecting means, provision information sent from the broadcast transmitting apparatus is converted to presentation information by the broadcast receiving apparatus, and the broadcast receiving apparatus can designate enabling information that makes only the limited presentation information effective. This makes it possible to reflect the information provider's intension and to present enabling information for the user. Moreover, even if presentation information is stored in the broadcast receiving apparatus, the information provider of the broadcast transmitting apparatus side transmits enabling information for extracting information to be currently provided, whereby narrowing the present range of presentation information. Furthermore, the user of the broadcast receiving apparatus can designate enabling information that makes only the limited presentation information effective. This makes it possible to reflect the information provider's intension and to present enabling information for the user.

In the system having the AV data providing apparatus, even if there is used the broadcast receiving apparatus, which does not store the entirety of the program so far or which can not store it, AV data so far can be replayed without fail when it is intended to be replayed by use of the AV data providing apparatus, which manages a portion or the entirety of AV data and which transmits it as required. In addition, the AV data providing apparatus is separated from the broadcast transmitting apparatus, whereby making it possible to manage AV data of various broadcast transmitting apparatuses and to supply the AV data to the broadcast receiving apparatus. Moreover, the user can automatically obtain necessary data as required, and this allows the user to receive the service provided by the information provider similar to the broadcast receiving apparatus having the storage medium with a large capacity.

The invention has been described in the above in connection with preferred embodiments, and it will be understood that various modifications and variations may be made without departing from the scope of the present invention set forth in attached claims.

## Claims

1. A broadcasting system based on storage in consumer platforms comprising a broadcast transmitting apparatus for transmitting AV data including an image of a program and sound and a broadcast receiving apparatus having storing means for storing received signals, wherein the broadcast transmitting apparatus multiplexes AV data and provision information for designating AV data, which an information provider intends for replay and viewing in accordance with the display of the AV data, and transmits it, and the broadcast receiving apparatus makes it possible to replay and view only the AV data designated by the provision information corresponding to the AV data when displaying the received AV data.

2. A broadcasting system based on storage in consumer platforms according to claim 1, wherein the broadcast receiving apparatus generates presentation information, which makes it possible to select the playback and viewing of the AV data stored to correspond to the provision information, and stores it.

3. A broadcasting system based on storage in consumer platforms according to claim 1 or 2, further comprising an AV data providing apparatus for storing all AV data transmitted from the broadcast transmitting apparatus, wherein the broadcast receiving apparatus obtains the AV data from the AV data providing apparatus when there is no AV data that a user wishes to replay and view in the storing means of the broadcast receiving apparatus.

4. A broadcast transmitting apparatus for use in a broadcasting system based on storage in consumer platforms according to claim 1, 2 or 3, the broadcast transmitting apparatus comprising:
AV material storing means for storing AV data;
AV material selecting means for selecting AV data from the AV material storing means;
provision information storing means for storing the provision information;
provision information selecting means for selecting provision information from the provision information storing means;
multiplexing means for multiplexing the AV data selected by the AV material selecting means and the provision information selected by the provision information selecting means to generate a multiplexed signal; and
transmitting means for converting the multiplexed signal to a broadcast signal in accordance with a transmission rule so as to transmit it.

5. A broadcast transmitting apparatus according to claim 4, wherein the provision information is composed of provision elements systemized in the form of a hierarchical structure, and the provision information selecting means selects a portion or the entirety of the provision elements.

6. A broadcast transmitting apparatus according to claim 4 or 5, wherein the provision information is linked to the AV data designated by said provision information.

7. A broadcasting transmitting apparatus according to claim 6, wherein information of the linked AV data is described in the provision element.

8. A broadcast transmitting apparatus according to claim 6 or 7, wherein the linked AV data is updated with a lapse of time.

9. A broadcast transmitting apparatus according to any one of claims 4 to 8, wherein the provision information enabling information for making a portion or the entirety of presentation information, which has been stored in the broadcast receiving apparatus and which has been linked to AV data, available.

10. A broadcast transmitting apparatus according to any one of claims 4 to 9, wherein a playback and viewing range of the AV data, which the information provider intends, is specified by cutting information, and the provision information is linked to the cutting information.

11. A broadcast transmitting apparatus according to claim 10, wherein a presenting method after storing the presentation information in the broadcast receiving apparatus is designated in the provision information.

12. A broadcast receiving apparatus for use in a broadcasting system based on storage in consumer platforms according to claim 1, 2 or 3, the broadcast receiving apparatus comprising:
receiving means for receiving a broadcast signal;
separating means for separating data received by the receiving means into AV data and the provision information;
AV data storage processing means for performing storage processing of the AV data;
AV data storing means for storing AV data subjected to storage processing by the AV data storage processing means;
AV data selecting means for selecting necessary AV data from the AV data storing means;
AV data output controlling means for determining AV data to be externally output by selecting either AV data from the separating means or AV data from the AV data selecting means;
presentation information storage processing means for converting the provision information separated by the separating means to the presentation information;
presentation information storing means for storing the presentation information;
presentation information selecting means for selecting the presentation information stored in the presentation information storing means to provide an instruction of selecting AV data to the AV data selecting means based on the selected presentation information; and
presentation information externally outputting means for externally outputting the presentation information from the presentation information selecting means.

13. A broadcast receiving apparatus according to claim 12, wherein AV data received in real time is separated by the separating means to be output to an external device, and the AV data is stored in the AV data storing means, and the presentation information to be externally output is generated based on the provision information received in real time, and when any presentation information is selected therefrom, corresponding data of the stored AV data is replayed.

14. A broadcast receiving apparatus according to claim 12 or 13, wherein when the presentation information storing means stores the presentation information in advance and enabling information is transmitted from the broadcast transmitting apparatus, the presentation information selecting means selects presentation information, which has been made available by the enabling information, from the presentation information stored in the presentation information storing means.

15. A broadcast receiving apparatus according to claim 12, 13 or 14, wherein the presentation information storing means stores cutting information that specifies a playback and viewing range of AV data transmitted from the broadcast transmitting apparatus, and the presentation information selecting means provides the instruction of selecting AV data to the AV data selecting means by use of the presentation information and the cutting information.

16. A broadcast receiving apparatus according to claim 12, 13, 14 or 15, wherein the way of selection of presentation information by the presentation information selecting means is limited based on a rule set by a user or an output history of AV data output from the AV data output controlling means.
